# EUROPEAN PATENT APPLICATION

(11) **EP 4 807 545 A1**
(43) Date of publication of application: **16.09.2026**
(21) Application number: 24892993.7
(22) Date of filing: 11.09.2024
(51) Int. Cl.: G06F 9/455

(54) **CONTAINER MIGRATION METHOD AND SYSTEM, AND COMPUTER-READABLE STORAGE MEDIUM**

(30) Priority: 24.11.2023 CN 202311593767
(71) Applicant: Huawei Technologies Co., Ltd., Shenzhen, Guangdong 518129 (CN); Institute Of Information Engineering Chinese Academy of Sciences, Beijing 100084 (CN)
(72) Inventor: WANG, Wenhao, Beijing 100084 (CN); GENG, Zhaoyang, Beijing 100084 (CN); XU, Xiangyi, Shenzhen, Guangdong 518129 (CN); JIN, Yier, Shenzhen, Guangdong 518129 (CN)
(74) Representative: Thun, Clemens
(86) International application number: PCT/CN2024/118167
(87) International publication number: WO 2025/107834

(57) **Abstract**

The present invention discloses a container migration method and system, and a computer-readable storage medium. The container migration system includes a first compute device and a second compute device. Software and hardware resources of the first compute device and software and hardware resources of the second compute device are both divided into a non-trusted execution environment and a trusted execution environment TEE. The TEE of the first compute device includes a first confidential container, and the TEE of the second compute device includes a standby confidential container. The first compute device is configured to send encrypted information of status information of the first confidential container to the second compute device, and the second compute device is configured to: decrypt the encrypted information to obtain the status information of the first confidential container, and synchronize a status of the standby confidential container with a status of the first confidential container based on the status information of the first confidential container. According to the method, during capacity expansion/system upgrade/load adjustment/fault recovery of a compute device, a tenant service that is being processed by a confidential container running on the compute device is not interrupted.

## Description

This application claims priority to Chinese Patent Application No. 202311593767.5, filed with the China National Intellectual Property Administration on November 24, 2023 and entitled "CONTAINER MIGRATION METHOD AND SYSTEM, AND COMPUTER-READABLE STORAGE MEDIUM", which is incorporated herein by reference in its entirety.

### TECHNICAL FIELD

This application relates to the field of virtualization technologies, and in particular, to a container migration method and system, and a computer-readable storage medium.

### BACKGROUND

A confidential container (confidential container) is a container that is created and runs in a trusted execution environment (trusted execution environment, TEE), and is an important application scenario in a container technology. Privacy and security of user data in the confidential container can be protected based on the TEE.

Currently, in a confidential container scenario, if capacity expansion/system upgrade/load adjustment/fault recovery needs to be performed on a compute device (for example, a server) configured to implement the confidential container, the compute device is usually restarted for one or more times during capacity expansion/system upgrade/load adjustment/fault recovery of the compute device. In this case, the confidential container on the compute device stops running. Consequently, a tenant service that is being processed by the confidential container is interrupted, which severely affects tenant experience.

### SUMMARY

This application provides a container migration method and system, and a computer-readable storage medium, so that during capacity expansion/system upgrade/load adjustment/fault recovery of a compute device, a tenant service that is being processed by a confidential container running on the compute device remains uninterrupted, thereby improving tenant experience.

According to a first aspect, a container migration system is provided. The container migration system includes a first compute device and a second compute device. Software and hardware resources of the first compute device are divided into a first TEE and a first non-trusted execution environment, and software and hardware resources of the second compute device are divided into a second TEE and a second non-trusted execution environment. The first TEE includes a first container, and the second TEE includes a standby container.

The first compute device is configured to send encrypted information of status information of the first container to the second compute device.

The second compute device is configured to receive and decrypt the encrypted information to obtain the status information of the first container.

The second compute device is further configured to synchronize a status of the standby container with a status of the first container based on the status information of the first container.

The status information of the first container includes status information of a tenant service running on the first container.

In the foregoing solution, because the first compute device migrates the status information of the first container to the second compute device, and the second compute device synchronizes the status of the standby container with the status of the first container based on the status information of the migrated first container, during capacity expansion/system upgrade/load adjustment/fault recovery of the first compute device, the second compute device may run the standby container to continue to process the tenant service. Even if the first container is shut down due to restart of the first compute device, the tenant service remains uninterrupted. In addition, because the standby container is located in the TEE of the second compute device, and the TEE has high security, continuing to process the tenant service by the standby container can protect security of tenant service data.

It can also be learned that, because the first compute device transmits the status information of the first container to the second compute device after encrypting the status information of the first container, the foregoing solution can further protect security of the status information of the first container during transmission.

In some possible implementations, the status of the first container includes a memory status of the first container, or the status of the first container includes a memory status of the first container and a status of communication between the first container and a virtual input/output (input output, I/O) device.

It may be understood that the status of the first container includes the memory status of the first container and the status of communication between the first container and the virtual I/O device. Compared with a case in which the status of the first container includes only the memory status of the first container, when the status of the standby container is subsequently synchronized with the status of the first container, a synchronized status is more complete.

In some possible implementations, the first TEE includes a first virtual machine, the second TEE includes a second virtual machine, the first container is located in the first virtual machine, and the standby container is located in the second virtual machine.

A processor of the first compute device is configured to run the first virtual machine to encrypt the status information of the first container to obtain the encrypted information.

The processor of the first compute device is configured to invoke a first communication interface in the first non-trusted execution environment to send the encrypted information to a second communication interface, where the first communication interface is a communication interface of the first compute device, and the second communication interface is a communication interface of the second compute device.

A processor of the second compute device is configured to obtain the encrypted information in the second non-trusted execution environment.

The processor of the second compute device is configured to run the second virtual machine to decrypt the encrypted information to obtain the status information of the first container.

The processor of the second compute device is configured to run the second virtual machine to synchronize the status of the standby container with the status of the first container based on the status information of the first container.

In the foregoing implementation, the status information of the first container is encrypted by the first virtual machine in the first TEE with high security, and is decrypted by the second virtual machine in the second TEE with high security, and the encrypted information is transmitted in the first non-trusted execution environment with low security and the second non-trusted execution environment with low security. Therefore, the status information of the first container can be prevented from being stolen in the first non-trusted execution environment with low security and the second non-trusted execution environment with low security, and security of the status information of the first container can be well protected.

In some possible implementations, the encrypted information is obtained by encrypting the status information of the first container by using an encryption key, the encryption key is obtained by the first virtual machine and the second virtual machine through negotiation, and the encryption key is further used to decrypt the encrypted information.

In the foregoing implementation, because the encryption key is obtained by the first virtual machine in the first TEE with high security and the second virtual machine in the second TEE with high security through negotiation, the first compute device only needs to transmit the encrypted information to the second compute device, and does not need to transmit the encryption key to the second compute device. Even if the encrypted information is stolen in a process in which the encrypted information is transmitted from the first compute device to the second compute device, or is stolen in the first non-trusted execution environment or the second non-trusted execution environment, the stolen encrypted information cannot be decrypted because the encryption key cannot be stolen. Therefore, the foregoing implementation can further improve security of the status information of the first container during transmission.

In some possible implementations, the processor of the first compute device is configured to run the first virtual machine to obtain authentication information of the first virtual machine.

The processor of the first compute device is configured to invoke the first communication interface in the first non-trusted execution environment to send the authentication information of the first virtual machine to the second communication interface.

The processor of the second compute device is configured to obtain the authentication information of the first virtual machine in the second non-trusted execution environment.

The processor of the second compute device is configured to run the second virtual machine to obtain the encryption key through negotiation with the first virtual machine when authenticating the first virtual machine based on the authentication information of the first virtual machine.

In the foregoing implementation, the first virtual machine negotiates with the second virtual machine to obtain the encryption key only when the second virtual machine is authenticated based on the authentication information of the second virtual machine. This can avoid the status information of the first container from being migrated to the second virtual machine when the second virtual machine is a non-trusted virtual machine, thereby protecting security of the status information of the first container.

In some possible implementations, the processor of the second compute device is configured to run the second virtual machine to obtain authentication information of the second virtual machine.

The processor of the second compute device is configured to invoke the second communication interface in the second non-trusted execution environment to send the authentication information of the second virtual machine to the first communication interface.

The processor of the first compute device is configured to obtain the authentication information of the second virtual machine in the first non-trusted execution environment.

The processor of the first compute device is configured to run the first virtual machine to obtain the encryption key through negotiation with the second virtual machine when authenticating the second virtual machine based on the authentication information of the second virtual machine.

In the foregoing implementation, the second virtual machine negotiates with the first virtual machine to obtain the encryption key only when the first virtual machine is authenticated based on the authentication information of the first virtual machine. This can avoid the status information of the first container from being migrated to the second virtual machine when the first virtual machine is a non-trusted virtual machine, thereby avoiding a security risk to the second compute device and the second virtual machine, and protecting security of the second compute device and the second virtual machine.

In some possible implementations, the authentication information of the first virtual machine includes a current measurement value of a configuration of the first virtual machine and a historical measurement value of the configuration of the first virtual machine, and the authentication information of the second virtual machine includes a current measurement value of a configuration of the second virtual machine and a historical measurement value of the configuration of the second virtual machine.

The processor of the second compute device is configured to run the second virtual machine to authenticate the first virtual machine when determining that the current measurement value of the configuration of the first virtual machine is the same as the historical measurement value of the configuration of the first virtual machine.

The processor of the first compute device is configured to run the first virtual machine to authenticate the second virtual machine when determining that the current measurement value of the configuration of the second virtual machine is the same as the historical measurement value of the configuration of the second virtual machine.

In some possible implementations, the processor of the second compute device is configured to run the second virtual machine to generate a message authentication code based on the encryption key and the first message.

The processor of the second compute device is configured to invoke the second communication interface in the second non-trusted execution environment to send the first message and the message authentication code to the first communication interface.

The processor of the first compute device is configured to obtain the first message and the message authentication code in the first non-trusted execution environment.

The processor of the first compute device is configured to run the first virtual machine to encrypt the status information of the first container by using the encryption key when determining, based on the first message and the message authentication code, that the encryption key is a valid key.

In the foregoing implementation, the first virtual machine encrypts the status information of the first container by using the encryption key only when determining, based on the message authentication code and the first message that are from the second virtual machine, that the encryption key is a valid key. This can avoid the status information of the first container from being migrated to the second virtual machine when the encryption key is an invalid key, thereby ensuring accurate migration of the first container.

In some possible implementations, the processor of the first compute device is configured to run the first virtual machine to generate a first private key and a first public key.

The processor of the first compute device is configured to invoke the first communication interface in the first non-trusted execution environment to send the first public key to the second communication interface.

The processor of the second compute device is configured to obtain the first public key in the second non-trusted execution environment.

The processor of the second compute device is configured to run the second virtual machine to generate a second private key and a second public key to generate the encryption key based on the second private key and the first public key.

The processor of the second compute device is configured to invoke the second communication interface in the second non-trusted execution environment to send the second public key to the first communication interface.

The processor of the first compute device is configured to obtain the second public key in the first non-trusted execution environment.

The processor of the first compute device is configured to run the first virtual machine to generate the encryption key based on the first private key and the second public key.

It can be learned that, in the foregoing implementation, the first virtual machine and the second virtual machine generate the encryption key based on public information (that is, a public key of a peer end) and private information (that is, a private key) held by each other, and the private information is not transmitted between the first virtual machine and the second virtual machine. Even if the public information is stolen during transmission, because the private information is not leaked, the encryption key cannot be stolen. Therefore, security of the status information that is of the first container and that is subsequently encrypted by using the encryption key can be protected during transmission. In addition, both the first virtual machine and the second virtual machine are located in the TEEs. Because the TEEs have high security, security of the encryption key can be well protected.

In some possible implementations, information about the status of communication between the first container and the virtual I/O device includes an identity of the first container.

Before the processor of the first compute device is configured to run the first virtual machine to encrypt the status information of the first container to obtain the encrypted information, the processor of the first compute device is further configured to:

run the first virtual machine to locate, in a virtual I/O device driver of the first virtual machine based on the identity of the first container, the information about the status of communication between the first container and the virtual I/O device.

After the processor of the second compute device is configured to run the second virtual machine to decrypt the encrypted information to obtain the status information of the first container, the processor of the second compute device is specifically configured to:

run the second virtual machine to load information about the memory status of the first container to a memory of the standby container, and load the information about the status of communication between the first container and the virtual I/O device to a virtual I/O device driver of the second virtual machine; and

run the second virtual machine to run the standby container based on the information that is about the memory status of the first container and that is in the memory of the standby container and the information that is about the status of communication between the first container and the virtual I/O device and that is located in the virtual I/O device driver of the second virtual machine based on the identity of the first container, to synchronize a memory status of the standby container with the memory status of the first container, and synchronize a communication status of the standby container with a communication status of the first container.

The information about the status of communication between the first container and the virtual I/O device is located in the virtual I/O device driver of the first virtual machine, and when the first virtual machine includes a plurality of confidential containers, the virtual I/O device driver is shared by the plurality of confidential containers. In other words, the virtual I/O device driver may include information about statuses of communication between the plurality of confidential containers and the virtual I/O device. Therefore, to enable the first virtual machine to accurately locate the information about the status of communication between the first container and the virtual I/O device from the virtual I/O device driver, it may be set that when each confidential container in the first virtual machine communicates with the virtual I/O device, a communication request sent by each confidential container to the virtual I/O device carries an identity (identity document, ID) of the confidential container. In addition, when receiving the communication request of the confidential container, the virtual I/O device driver adds the communication request and the identity that is of the confidential container and that is carried in the communication request to a virtual queue in the virtual I/O device driver, so that when the first virtual machine subsequently migrates the first container, the first virtual machine can accurately locate, based on the identity of the first container from the virtual queue in the virtual I/O device driver, the communication request of the first container to the virtual I/O device and response information returned by the virtual I/O device based on the communication request. The located information is the information about the status of communication between the first container and the virtual I/O device.

In addition, because the information about the status of communication between the first container and the virtual I/O device includes the identity of the first container, when running the standby container, the second virtual machine can accurately locate, from the virtual I/O device driver of the second virtual machine based on the identity of the first container, the information about the status of communication between the first container and the virtual I/O device, thereby synchronizing the communication status of the standby container with the communication status of the first container based on the information about the status of communication.

According to a second aspect, a container migration method is provided, applied to a second compute device. Software and hardware resources of the second compute device are divided into a second non-trusted execution environment and a second TEE, the second TEE includes a standby container, and the method includes:

The second compute device obtains encrypted information of status information of a first container, where the first container is deployed in a first TEE, and the first TEE is a TEE of the first compute device;
the second compute device decrypts the encrypted information to obtain the status information of the first container; and
the second compute device synchronizes a status of the standby container with a status of the first container based on the status information of the first container.

In some possible implementations, the status of the first container includes a memory status of the first container, or the status of the first container includes a memory status of the first container and a status of communication between the first container and a virtual I/O device.

In some possible implementations, the second TEE includes a second virtual machine, and the standby container is deployed on the second virtual machine.

That the second compute device obtains the encrypted information of the status information of the first container includes:

A processor of the second compute device obtains the encrypted information of the status information of the first container in the second non-trusted execution environment.

That the second compute device decrypts the encrypted information to obtain the status information of the first container includes:

The processor of the second compute device runs the second virtual machine to decrypt the encrypted information to obtain the status information of the first container.

That the second compute device synchronizes the status of the standby container with the status of the first container based on the status information of the first container includes:

The processor of the second compute device runs the second virtual machine to synchronize the status of the standby container with the status of the first container based on the status information of the first container.

In some possible implementations, the encrypted information is obtained by encrypting the status information of the first container by using an encryption key, the encryption key is obtained by the first virtual machine and the second virtual machine through negotiation, the encryption key is further used to decrypt the encrypted information, the first virtual machine is deployed in the first TEE, and the first container is deployed on the first virtual machine.

In some possible implementations, the method further includes:

The processor of the second compute device obtains authentication information of the first virtual machine in the second non-trusted execution environment; and
the processor of the second compute device runs the second virtual machine to obtain the encryption key through negotiation with the first virtual machine when authenticating the first virtual machine based on the authentication information of the first virtual machine.

In some possible implementations, the method further includes:

The processor of the second compute device runs the second virtual machine to obtain authentication information of the second virtual machine; and
the processor of the second compute device invokes a second communication interface in the second non-trusted execution environment to send the authentication information of the second virtual machine to a first communication interface, where the second communication interface is a communication interface of the second compute device, and the first communication interface is a communication interface of the first compute device.

In some possible implementations, the authentication information of the first virtual machine includes a current measurement value of a configuration of the first virtual machine and a historical measurement value of the configuration of the first virtual machine.

The method further includes:
The processor of the second compute device runs the second virtual machine to authenticate the first virtual machine when determining that the current measurement value of the configuration of the first virtual machine is the same as the historical measurement value of the configuration of the first virtual machine.

In some possible implementations, the processor of the second compute device runs the second virtual machine to generate a message authentication code based on the encryption key and the first message.

The processor of the second compute device invokes the second communication interface in the second non-trusted execution environment to send the first message and the message authentication code to the first communication interface, where the second communication interface is the communication interface of the second compute device, and the first communication interface is the communication interface of the first compute device.

In some possible implementations, information about the status of communication between the first container and the virtual I/O device includes an identity of the first container.

That the processor of the second compute device runs the second virtual machine to synchronize the status of the standby container with the status of the first container based on the status information of the first container includes:

The processor of the second compute device runs the second virtual machine to load information about the memory status of the first container to a memory of the standby container, and load the information about the status of communication between the first container and the virtual I/O device to a virtual I/O device driver of the second virtual machine; and

the processor of the second compute device runs the second virtual machine to run the standby container based on the information that is about the memory status of the first container and that is in the memory of the standby container and the information that is about the status of communication between the first container and the virtual I/O device and that is located in the virtual I/O device driver of the second virtual machine based on the identity of the first container, to synchronize a memory status of the standby container with the memory status of the first container, and synchronize a communication status of the standby container with a communication status of the first container.

According to a third aspect, a container migration method is provided, applied to a first compute device. Software and hardware resources of the first compute device are divided into a first non-trusted execution environment and a first TEE, the first TEE includes a first container, and the method includes:

A processor of the first compute device encrypts status information of the first container in the first TEE to obtain encrypted information; and
the processor of the first compute device invokes a communication interface of the first compute device in the first non-trusted execution environment to send the encrypted information to a second compute device, where the encrypted information is used to migrate the status information of the first container to a standby container, the standby container is deployed in a second TEE, and the second TEE is a TEE of the second compute device.

According to a fourth aspect, a container migration apparatus is provided, used in a second compute device. Software and hardware resources of the second compute device are divided into a second non-trusted execution environment and a second TEE, the second TEE includes a standby container, and the apparatus includes:
an obtaining module, configured to obtain encrypted information of status information of a first container, where the first container is deployed in a first TEE, and the first TEE is a TEE of a first compute device;
a decryption module, configured to decrypt the encrypted information to obtain the status information of the first container; and
a synchronization module, configured to synchronize a status of the standby container with a status of the first container based on the status information of the first container.

According to a fifth aspect, a container migration apparatus is provided, used in a first compute device. Software and hardware resources of the first compute device are divided into a first non-trusted execution environment and a first TEE, the first TEE includes a first container, and the apparatus includes:
an encryption module, configured to encrypt status information of the first container in the first TEE to obtain encrypted information; and
a sending module, configured to invoke a communication interface of the first compute device in the first non-trusted execution environment to send the encrypted information to a second compute device, where the encrypted information is used to migrate the status information of the first container to a standby container, the standby container is deployed in a second TEE, and the second TEE is a TEE of the second compute device.

For related beneficial effect and descriptions of the container migration method provided in the second aspect/the third aspect and any implementation of the second aspect/the third aspect, and related beneficial effect and descriptions of the container migration apparatus provided in the fourth aspect/fifth aspect and any implementation of the fourth aspect/fifth aspect, refer to related beneficial effect and descriptions of the container migration system provided in the first aspect and any implementation of the first aspect. Details are not described herein again.

According to a sixth aspect, a compute device is provided. The compute device includes a processor and a memory. The processor is configured to execute instructions stored in the memory, to enable the compute device to implement the method provided in the second aspect or the third aspect and any implementation of the second aspect or the third aspect.

According to a seventh aspect, a container migration system is provided, including the container migration apparatus according to the fourth aspect and the container migration apparatus according to the fifth aspect.

According to an eighth aspect, a computer-readable storage medium is provided. The computer-readable storage medium stores instructions, and the instructions are used to implement the method provided in the second aspect or the third aspect and any implementation of the second aspect or the third aspect.

According to a ninth aspect, a computer program product is provided, including a computer program. When the computer program is read and executed by a compute device, the compute device is enabled to perform the method provided in the second aspect or the third aspect and any implementation of the second aspect or the third aspect.

### BRIEF DESCRIPTION OF DRAWINGS

FIG. 1 is a diagram of a VirtIO protocol architecture according to an embodiment of this application;
FIG. 2 is a diagram of a VirtIO protocol communication model according to an embodiment of this application;
FIG. 3 is a diagram of a structure of a container migration system according to an embodiment of this application;
FIG. 4 is an interaction diagram of a container migration method according to an embodiment of this application;
FIG. 5 is a diagram of a specific embodiment of a container migration method according to an embodiment of this application;
FIG. 6 is a diagram of a process of obtaining an encryption key through negotiation according to an embodiment of this application;
FIG. 7 is a diagram of a structure of a container migration apparatus according to an embodiment of this application;
FIG. 8 is a diagram of a structure of another container migration apparatus according to an embodiment of this application; and
FIG. 9 is a diagram of a structure of a compute device according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner for describing objects having a same attribute in embodiments of this application. In addition, the terms "include", "have" and any other variants mean to cover non-exclusive inclusion, so that a process, method, system, product, or device that includes a series of units is not necessarily limited to those units, but may include other units not expressly listed or inherent to such a process, method, system, product, or device.

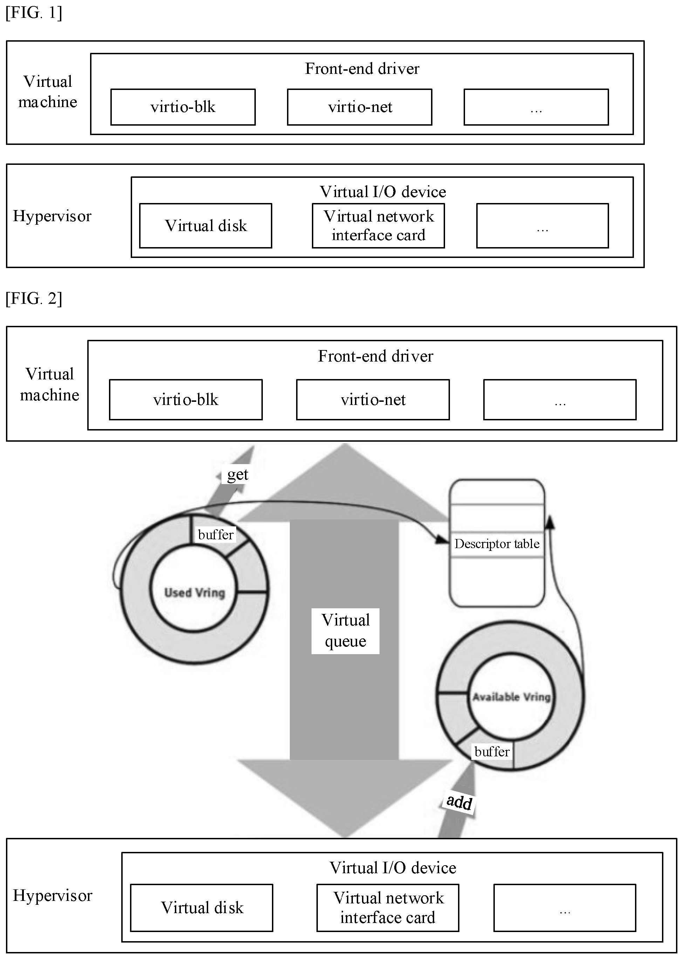

To help clearly understand the technical solutions provided in this application, some nouns and terms related to the technical solutions provided in this application are first described.
(1) A trusted execution environment (trusted execution environment, TEE) usually includes hardware and software in a compute device, and may run on a common operating system to provide a secure running environment, so that malware cannot obtain or tamper with data and code in the TEE, thereby ensuring security and privacy of sensitive data and code. The TEE may be created in the compute device by using technologies such as a TrustZone (TrustZone) technology based on an ARM architecture, AMD secure encrypted virtualization (secure encrypted virtualization, SEV), and Intel software guard extensions (software guard extensions, SGX).
(2) A non-trusted execution environment includes remaining software and hardware resources in the compute device other than software and hardware resources included in the TEE.
   The non-trusted execution environment does not mean that an operating system (operating system, OS) or software running in the environment is malicious, but security of the environment is lower than that of the TEE. Because when a processor works in the non-trusted execution environment, resources (such as a register, a memory, a cache (cache), and a peripheral) in the TEE are not allowed to be accessed. Once the processor attempts to access the resources, a system directly crashes. For example, TrustZone may set a sensitive memory to a secure memory (secure memory) by configuring a trustzone address controller (trustzone address space controller, TZASC) register and a trustzone memory adapter (trustzone memory adapter, TZMA) register. When the processor works in the non-trusted execution environment, the processor cannot access the secure memory. When the processor works in the TEE, the processor can access both resources in the TEE and resources in the non-trusted execution environment.
(3) A confidential virtual machine (confidential virtual machine, CVM) is a product of combining a confidential computing technology with a cloud native technology, and is a virtual machine located in the TEE. The confidential virtual machine can implement resource isolation, data encryption, and remote attestation based on the TEE, to prevent a cloud service provider and any high-privilege third party from stealing and tampering with data in the confidential virtual machine, thereby effectively protecting security of tenant data and assets.
(4) A common virtual machine is a virtual machine located in the non-trusted execution environment.
(5) A confidential container is a product of combining the confidential computing technology with the cloud native technology, and is a container located in the TEE. The confidential container can implement resource isolation, data encryption, and remote attestation based on the TEE, to prevent a cloud service provider and any high-privilege third party from stealing and tampering with data in the confidential container, thereby effectively protecting security of tenant data and assets.
(6) A common container is a container located in the non-trusted execution environment.
(7) A virtual input/output (input output, I/O) device, also referred to as a virtual device, is an I/O device simulated by using software, and is configured to simulate functions of a physical I/O device in a computer system. The virtual input/output device can provide interfaces and functions similar to those of the physical I/O device, but the interfaces and the functions are actually implemented by using software.
   A main purpose of the virtual I/O device is to provide virtualization and management of physical I/O resources in a virtualization environment. In virtualization technologies, when a plurality of virtual machines or containers share a physical I/O device, the virtual I/O device can help isolate and schedule resources, and provide better performance and reliability.
   The following provides some common virtual I/O devices:
   Virtual disk (virtual disk): The virtual disk is a disk device simulated by using software, and is used to provide storage space for a virtual machine or container in a virtualization environment. The virtual disk can divide a capacity of a physical disk into a plurality of logical volumes and provide independent disk space for each virtual machine or container.
   Virtual network interface card (virtual network interface card, vNIC): The virtual network interface card is a network interface device simulated by using software, and is used to provide network connections for a virtual machine or container in a virtualization environment. The virtual network interface card can simulate functions of a physical network interface card to implement communication between a virtual machine or container and a physical network.
   Virtual serial port (virtual serial port): The virtual serial port is a serial port device simulated by using software, and is used to simulate functions of a physical serial port in a virtualization environment. The virtual serial port can be used for serial port communication between a virtual machine or container and an external device, for example, used to connect to a debugging tool or an external sensor.
   Virtual universal serial bus device (virtual universal serial bus device): The virtual universal serial bus device is referred to as a virtual USB device for short, is a USB device simulated by using software, and is used to simulate functions of a physical USB device in a virtualization environment. The virtual USB device can provide a virtual machine or container with access to and management of a USB device, for example, used to connect to a USB storage device or an external input device.
   The virtual I/O device enables the virtual machine or container in the virtualization environment to better utilize and manage I/O resources, and provides more flexible and efficient I/O functions.
(8) Virtual input/output (VirtIO) may be understood as a set of programs for virtualizing universal input/output (input/output, I/O) devices. Specifically, as shown in FIG. 1, a VirtIO protocol architecture includes a front-end driver (front-end driver) and a virtual I/O device (virtio device). The front-end driver may also be referred to as a virtual I/O device driver, and the virtual I/O device may also be referred to as a back-end device. The front-end driver includes drivers such as a virtual disk (virtio-blk) driver and a virtual network interface card (virtio-net) driver, and is located in a virtual machine. The virtual I/O device is located in a virtual machine manager (Hypervisor). A main function of the front-end driver is to discover the virtual I/O device, receive a request from the virtual machine, and communicate with the virtual I/O device in the Hypervisor according to a VirtIO protocol.

As shown in FIG. 2, the VirtIO protocol uses a front-end and back-end communication model, runs the front-end driver in the virtual machine, and exchanges data with the virtual I/O device in the Hypervisor through a virtual queue (virtqueue). The virtual queue is implemented by using a vring, and the vring is a shared ring buffer between the virtual machine and the virtual I/O device.

The vring implements efficient data transmission by using three main components: a descriptor table (descriptor table), an available ring (available ring), and a used ring (used ring). The following describes functions of the descriptor table, the available ring, and the used ring:

Descriptor table:
Structure: The descriptor table is an array, and each element is a descriptor, which is used to describe a location and an attribute of a memory area. Each descriptor includes a physical address, a length, and other control information of a memory block.
Usage: The front-end driver and the virtual I/O device share a reference to a buffer through the descriptor table. The front-end driver creates descriptors and adds the descriptors to the descriptor table, while the virtual I/O device can read these descriptors to determine a location and a size of data to be read or written.

Available ring:
Structure: The available ring is a ring buffer that includes a set of indexes, which correspond to the descriptors in the descriptor table.
Usage: The available ring is used to notify the virtual I/O device that there are new tasks to be processed. Specifically, the front-end driver adds new indexes to the available ring, indicating new tasks that the virtual I/O device needs to process. The virtual I/O device polls the ring to check whether there are new tasks to be executed. Updating the available ring is a manner in which the front-end driver notifies the virtual I/O device that there are new tasks that need to be processed.

Used ring:
Structure: The used ring is also a ring buffer that includes a set of indexes, which correspond to descriptors that have been used by the virtual I/O device in the descriptor table.
Usage: The used ring is used to notify the front-end driver that the virtual I/O device has completed some tasks. Specifically, after completing the tasks, the virtual I/O device adds indexes of the corresponding descriptors to the used ring. The front-end driver may periodically poll the used ring to check which tasks have been completed.

When a container is deployed on a virtual machine, if the container needs to perform an I/O operation, the virtual machine may allocate a corresponding virtual I/O device to the container, and then the container may exchange data with the corresponding virtual I/O device through a virtual queue in the front-end driver. When a plurality of containers are deployed on a same virtual machine, if the plurality of containers all need to perform an I/O operation, the plurality of containers all exchange data with respective virtual I/O devices allocated to the plurality of containers through virtual queues in the front-end driver. In other words, the plurality of containers share a same front-end driver.

The following describes application scenarios related to embodiments of this application.

Embodiments of this application relate to a confidential container scenario, and in particular, to scenarios in which capacity expansion/system upgrade/load adjustment/fault recovery needs to be performed on a compute device (for example, a server) on which a confidential container runs. In these scenarios, the compute device is usually restarted for one or more times during capacity expansion/system upgrade/load adjustment/fault recovery of the compute device. In this case, the confidential container on the compute device stops running. Consequently, a tenant service that is being processed by the confidential container is interrupted, which severely affects tenant experience.

For the foregoing problem, this application provides a container migration method and system. Before capacity expansion/system upgrade/load adjustment/fault recovery is performed on the compute device on which the confidential container runs, the confidential container on the compute device is migrated to another compute device. In this way, during capacity expansion/system upgrade/load adjustment/fault recovery of the compute device, the migrated confidential container runs on the another compute device to continue to process the tenant service, to ensure that the tenant service remains uninterrupted, and optimize tenant experience.

The following separately describes the container migration method and system provided in this application with reference to corresponding accompanying drawings. Before the container migration method and system provided in this application are described, concepts such as a status of a container and container migration in embodiments of this application are first described.
(1) Status of a container: If the container is not in a state of communicating with a virtual I/O device, the status of the container includes only a memory status of the container; or if the container is in a state of communicating with a virtual I/O device, the container status includes a memory status of the container and a status of communication between the container and the virtual I/O device.

The memory status of the container refers to memory data of the container, and may reflect a running status of the container, that is, a running status of the container process, including a status of service running on the container.

The status of communication between the container and the virtual I/O device may reflect a status of communication between the container and the virtual I/O device, and may include a read/write request sent by the container to the virtual I/O device, and response information sent by the virtual I/O device to the container after the virtual I/O device processes the read/write request from the container. For example, it is assumed that a virtual machine to which a container A belongs implements I/O device virtualization according to the VirtIO protocol. In this case, information about a status of communication between the container A and a virtual I/O device includes all information related to the container A in the descriptor table, the available ring, and the used ring in the virtual queue in the front-end driver.

(2) Container migration may be understood as container status migration, that is, a status of a container is migrated from a compute device to which the container belongs to another compute device, and the status of the container is restored on the another compute device.

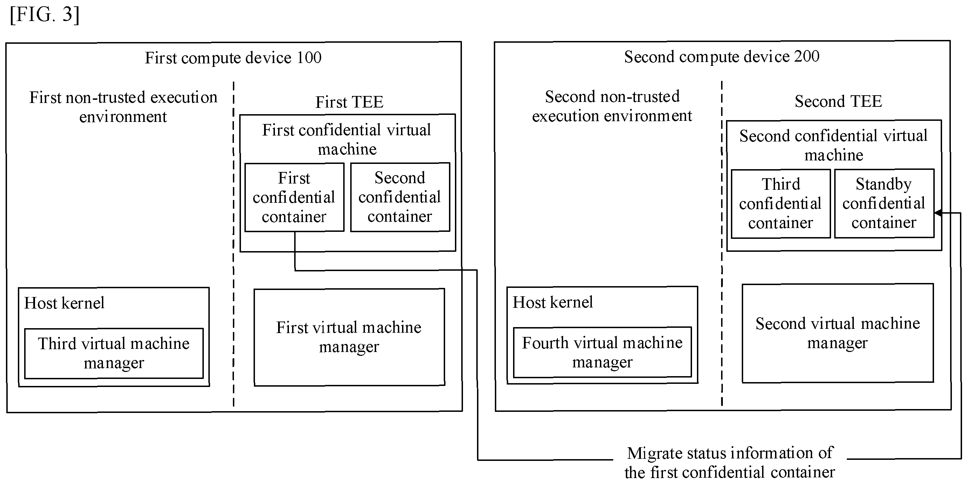

First, FIG. 3 is a diagram of a structure of a container migration system according to an embodiment of this application. As shown in FIG. 3, the system includes a first compute device 100 and a second compute device 200. The first compute device 100 and the second compute device 200 may transmit data via a communication network of any communication mechanism/communication standard. The communication network may be in a form of a wide area network, a local area network, a point-to-point connection, or the like, or any combination thereof.

In FIG. 3, the first compute device 100 may be considered as a confidential container migration-out device (which may also be referred to as a source host), and the second compute device 200 may be considered as a confidential container migration-in device (which may also be referred to as a target host).

The first compute device 100 and the second compute device 200 may be personal computers (personal computer, PC), tablet computers, physical servers, or the like. The physical server is, for example, an x86 server, an ARM server, or the like. The first compute device 100 and the second compute device 200 may belong to a same data center or different data centers.

As shown in FIG. 3, software and hardware resources of the first compute device 100 and the second compute device 200 are divided into a non-trusted execution environment and a TEE. For differentiation, in FIG. 3 and the following embodiments, the non-trusted execution environment and the TEE in the first compute device 100 are correspondingly referred to as a first non-trusted execution environment and a first TEE, and the non-trusted execution environment and the TEE in the second compute device 200 are correspondingly referred to as a second non-trusted execution environment and a second TEE.

The first TEE may include one or more confidential virtual machines, and each confidential virtual machine may include one or more confidential containers. In FIG. 3, for example, the first TEE includes one confidential virtual machine, and the confidential virtual machine includes two confidential containers. Optionally, the first non-trusted execution environment may include one or more common virtual machines, and each common virtual machine may include one or more common containers, which are not shown in FIG. 3.

The second TEE may include one or more confidential virtual machines, and each confidential virtual machine may include one or more confidential containers. In FIG. 3, for example, the second TEE includes one confidential virtual machine, and the confidential virtual machine includes two confidential containers. Optionally, the second non-trusted execution environment may include one or more common virtual machines, and each common virtual machine may include one or more common containers, which are not shown in FIG. 3.

Functions of the confidential virtual machine are the same as functions of the common virtual machine. All work that can be completed in the common virtual machine can be implemented in the confidential virtual machine. A tenant may remotely log in to the confidential virtual machine, and install, set, and uninstall an application on the confidential virtual machine in an operating system environment of the confidential virtual machine. Functions of the confidential container are the same as functions of the common container. All work that can be completed in the common container can be implemented in the confidential container. The tenant may remotely operate the confidential container, for example, start the confidential container or suspend running of the confidential container.

As shown in FIG. 3, the first TEE includes a first virtual machine manager that manages a confidential virtual machine in the first TEE, the second TEE includes a second virtual machine manager that manages a confidential virtual machine in the second TEE, the first non-trusted execution environment may further include a third virtual machine manager that manages a common virtual machine in the first non-trusted execution environment, and the second non-trusted execution environment may further include a fourth virtual machine manager that manages a common virtual machine in the second non-trusted execution environment.

The first/second virtual machine manager may implement logical isolation between different confidential virtual machines in the first/second TEE and manage the confidential virtual machines, for example, create a confidential virtual machine, simulate virtual hardware (a hardware simulation function) for a confidential virtual machine based on a hardware layer, delete a confidential virtual machine, forward and/or process network packets between all confidential virtual machines running on the first compute device 100/second compute device 200 or forward a network packet between a confidential virtual machine on the first compute device 100/second compute device 200 and an external network (a virtual switching function), process input/output (input/output, I/O) generated by a confidential virtual machine, and the like.

A management operation performed by the first/second virtual machine manager on the confidential virtual machine is performed in collaboration with the third/fourth virtual machine manager. In other words, to protect security of the confidential virtual machine, when the tenant needs to manage the confidential virtual machine in the first/second TEE, the third/fourth virtual machine manager obtains a management instruction of the tenant and then sends the management instruction to the first/second virtual machine manager, and the first/second virtual machine manager performs the management operation based on the management instruction.

When the confidential virtual machine in the first/second TEE needs to communicate with the outside, to protect security of the confidential virtual machine, the first/second virtual machine manager and the third/fourth virtual machine manager are used as bridges to communicate with an external network. For example, the confidential virtual machine sends a packet to the first/second virtual machine manager, the first/second virtual machine manager forwards the packet to the third/fourth virtual machine manager, and then the third/fourth virtual machine manager forwards the packet to the external network; or the external network sends a packet to the confidential virtual machine, the third/fourth virtual machine manager forwards the packet to the first/second virtual machine manager, and then the first/second virtual machine manager forwards the packet to the confidential virtual machine.

In the container migration system shown in FIG. 3, to ensure that the first confidential container (which is a confidential container that needs to be migrated out of the first compute device 100) is still secure after being migrated from the first compute device 100 to the second compute device 200, the first confidential container may be migrated to the TEE (namely, the second TEE) of the second compute device 200. Specifically, a standby confidential container (a container that is specifically used to migrate another confidential container (for example, the first confidential container) and that has an empty memory) may be created in the second compute device 200, and the first compute device 100 sends status information of the first confidential container to the second compute device 200. As shown by an arrow in FIG. 3, after receiving the status information of the first confidential container, the second compute device 200 restores a status of the first confidential container on the standby confidential container based on the status information of the first confidential container. In other words, a status of the standby confidential container is synchronized with the status of the first confidential container based on the status information of the first confidential container, to migrate the first confidential container.

To ensure security of the status information of the first confidential container in a process of transmitting the status information of the first confidential container from the first compute device 100 to the second compute device 200, before sending the status information of the first confidential container to the second compute device 200, the first compute device 100 may encrypt the status information of the first confidential container and then send the encrypted status information to the second compute device 200. After receiving the encrypted information of the status information of the first confidential container, the second compute device 200 may decrypt the encrypted information to obtain the status information of the first confidential container.

In a possible embodiment, to further improve security of the status information of the first confidential container in the process of transmitting the status information of the first confidential container from the first compute device 100 to the second compute device 200, a key used by the first compute device 100 and the second compute device 200 for encryption and decryption may be obtained by the first compute device 100 and the second compute device 200 through negotiation. In other words, the first compute device 100 and the second compute device 200 do not transmit the key, and the key is not stolen during transmission.

In another possible embodiment, to further improve security of the status information of the first confidential container in the process of transmitting the status information from the first compute device 100 to the second compute device 200, a key used by the first compute device 100 and the second compute device 200 for encryption and decryption may be obtained by a confidential virtual machine (referred to as a first confidential virtual machine) to which the first confidential container in the first compute device 100 belongs and a confidential virtual machine (referred to as a second confidential virtual machine) to which the standby confidential container in the second compute device 200 belongs through negotiation, and is stored in respective memories of the first confidential virtual machine and the second confidential virtual machine. In addition, an encryption operation performed on the status information of the first confidential container is performed by the first confidential virtual machine, and a decryption operation performed on the encrypted information of the status information of the first confidential container is performed by the second confidential virtual machine. In other words, the key is not transmitted between the first compute device 100 and the second compute device 200, and is not transmitted between the non-trusted execution environment (that is, the first non-trusted execution environment) in the first compute device 100 and the non-trusted execution environment (that is, the second non-trusted execution environment) in the second compute device 200. In addition, because a memory of the first confidential virtual machine belongs to the first TEE, the first non-trusted execution environment is not authorized to access the key stored in the memory of the first confidential virtual machine; and because a memory of the second confidential virtual machine belongs to the second TEE, the second non-trusted execution environment is also not authorized to access the key stored in the memory of the second confidential virtual machine. Therefore, the key can be prevented from being obtained by malicious software in the first non-trusted execution environment/the second non-trusted execution environment, and the key can be prevented from being stolen by an attacker when the first non-trusted execution environment/the second non-trusted execution environment is attacked, thereby better protecting security of the status information of the first confidential container.

It should be understood that the container migration system shown in FIG. 3 is merely an example provided in embodiments of this application. This is not specifically limited in this application. For example, in a specific implementation, the container migration system shown in FIG. 3 may further include more compute devices such as a third compute device and a fourth compute device, and a network device configured to forward communication data between compute devices.

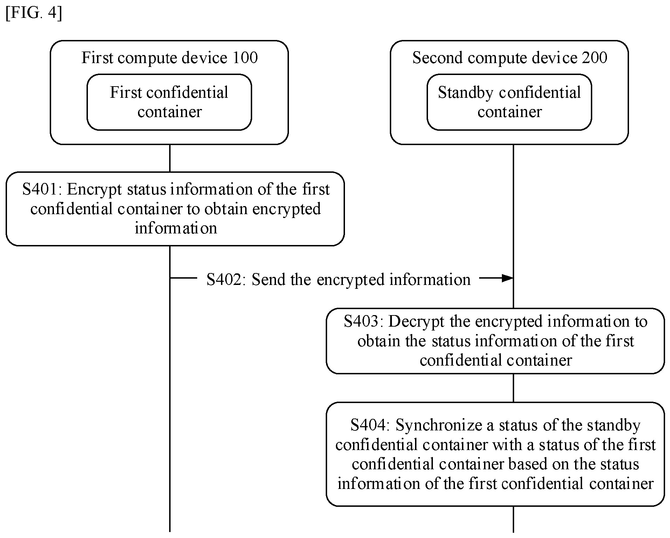

To facilitate clearer understanding of a process of migrating a confidential container by the container migration system shown in FIG. 3, the following describes in detail with reference to an interaction diagram of a container migration method according to an embodiment of this application shown in FIG. 4.

S401: The first compute device 100 encrypts the status information of the first confidential container to obtain the encrypted information.

S402: The first compute device 100 sends the encrypted information to the second compute device 200, and correspondingly, the second compute device 200 receives the encrypted information sent by the first compute device 100.

S403: The second compute device 200 decrypts the encrypted information to obtain the status information of the first confidential container.

S404: The second compute device 200 synchronizes the status of the standby confidential container with the status of the first confidential container based on the status information of the first confidential container.

For the status of the first confidential container, refer to the foregoing descriptions of a status of a container. For brevity of the specification, details are not described again.

Specifically, before performing the encryption operation, the first compute device 100 may first check whether the first confidential container is in a state of communicating with a virtual I/O device. If it is determined that the first confidential container is in the state of communicating with the virtual I/O device, the encrypted status information of the first confidential container includes information about a memory status of the first confidential container and information about a status of communication between the first confidential container and the virtual I/O device. Alternatively, if it is determined that the first confidential container is not in the state of communicating with the virtual I/O device, the encrypted status information of the first confidential container includes only information about a memory status of the first confidential container.

Optionally, if the first compute device 100 determines that the first confidential container is in the state of communicating with the virtual I/O device, the encrypted status information of the first confidential container may alternatively include only the information about the memory status of the first confidential container. This is not specifically limited in this application.

When the status information of the first confidential container includes only the information about the memory status of the first confidential container, in S404, status synchronization that is between the standby confidential container and the first confidential container and that is implemented by the second compute device 200 is memory status synchronization. When the status information of the first confidential container includes the information about the memory status of the first confidential container and the information about the status of communication between the first confidential container and the virtual I/O device, in S404, status synchronization that is between the standby confidential container and the first confidential container and that is implemented by the second compute device 200 is memory status synchronization and communication status synchronization with the virtual I/O device.

It may be understood that, when the first compute device 100 determines that the first confidential container is in the state of communicating with the virtual I/O device, the status information that is of the first confidential container and that is encrypted by the first compute device 100 includes the information about the memory status of the first confidential container and the information about the status of communication between the first confidential container and the virtual I/O device. Compared with a case in which the status information of the first confidential container includes only the information about the memory status of the first confidential container, when the status of the standby confidential container is subsequently synchronized with the status of the first confidential container, a synchronized status is more complete.

An algorithm used by the first compute device 100 and the second compute device 200 for encryption and decryption may be a symmetric encryption algorithm, such as an advanced encryption standard (advanced encryption standard, AES), a data encryption standard (data encryption standard, DES), or a triple data encryption standard (triple data encryption standard, 3DES), or may be an asymmetric encryption algorithm, such as RSA, elliptic curve cryptography (elliptic curve cryptography, ECC), or a digital signature algorithm (digital signature algorithm, DSA). This is not specifically limited in this application.

It may be understood that, because the status information of the first confidential container includes a status of a tenant service that is being processed by the first confidential container, after the second compute device 200 synchronizes the status of the standby confidential container with the status of the first confidential container, the second compute device 200 may run the standby confidential container to continue processing the tenant service. In this way, the tenant service is not affected by capacity expansion/system upgrade/load adjustment/fault recovery of the first compute device 100.

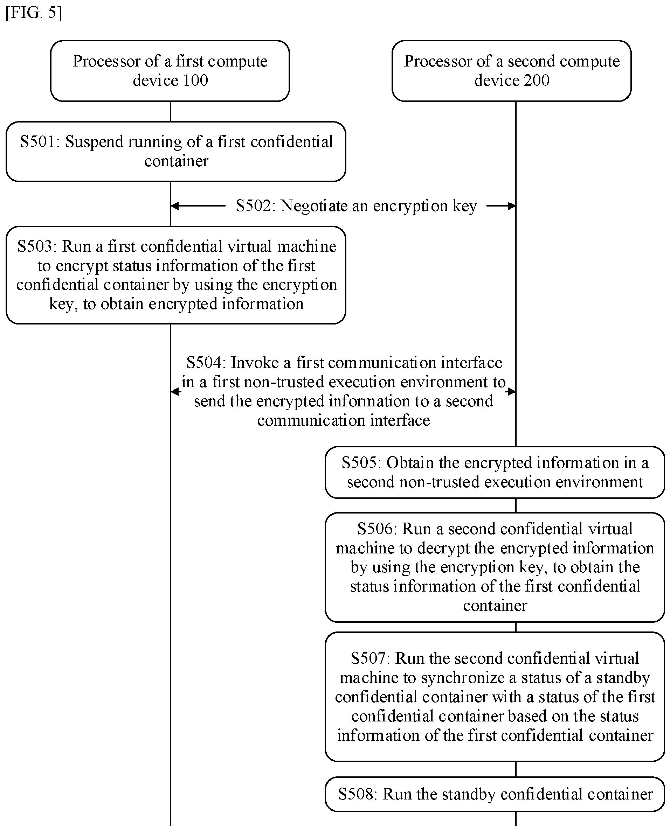

With reference to a more specific embodiment, the following describes the container migration method that is provided in this application and shown in FIG. 4. As shown in FIG. 5, this embodiment includes the following steps:
S501: A processor of the first compute device 100 suspends running of the first confidential container.

In a possible embodiment, before S501, the processor of the first compute device 100 may further obtain configuration information (such as a configuration of a central processing unit (central processing unit, CPU), a memory, a disk, or a network) of the second compute device 200, and check whether the configuration of the second compute device is the same as a configuration of the first compute device 100. If the configurations are the same, S501 is performed. Alternatively, if the configurations are not the same, S501 may continue to be performed, or S501 may not be performed. When the configurations are the same, performing S501 can ensure that the first confidential container is successfully migrated and can run normally in a new environment. This helps reduce problems and risks in a migration process and improve a success rate of container migration.

S502: The processor of the first compute device 100 and a processor of the second compute device 200 obtain an encryption key through negotiation.

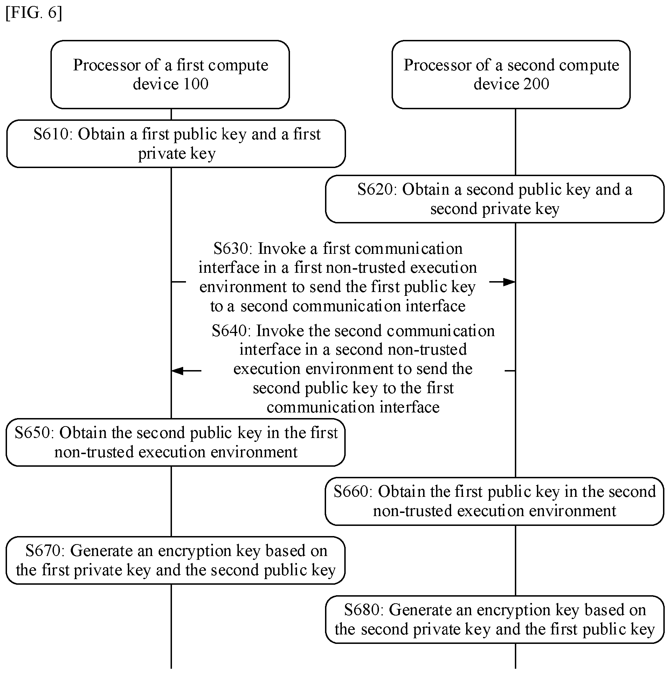

For a specific implementation process of S502, refer to related descriptions in FIG. 6.

S503: The processor of the first compute device 100 runs the first confidential virtual machine to encrypt the status information of the first confidential container by using the encryption key, to obtain the encrypted information.

For example, the status information of the first confidential container includes the information about the memory status of the first confidential container and the information about the status of communication between the first confidential container and the virtual I/O device. S503 may be specifically: The processor of the first compute device 100 runs the first confidential virtual machine to obtain the information about the memory status of the first confidential container and the information about the status of communication between the first confidential container and the virtual I/O device, and then encrypts the obtained information by using the encryption key, to obtain the encrypted information. In a specific implementation, the information about the memory status of the first confidential container and the information about the status of communication between the first confidential container and the virtual I/O device may be encrypted and transmitted together, or may be encrypted and transmitted separately. This is not specifically limited in this application.

The following describes a process in which the processor of the first compute device 100 runs the first confidential virtual machine to obtain the information about the memory status of the first confidential container and the information about the status of communication between the first confidential container and the virtual I/O device.
(1) Obtain the information about the memory status of the first confidential container.
   The processor of the first compute device 100 may run the first confidential virtual machine to collect all context information of a process of the first confidential container by using a process tracing (ptrace) mechanism, and then classify the context information by functions and store the context information as image files. These image files are the information about the memory status of the first confidential container.
(2) Obtain the information about the status of communication between the first confidential container and the virtual I/O device.

The information about the status of communication between the first confidential container and the virtual I/O device is located in a virtual I/O device driver of the first confidential virtual machine, and when the first confidential virtual machine includes a plurality of confidential containers, the virtual I/O device driver is shared by the plurality of confidential containers. In other words, the virtual I/O device driver may include information about statuses of communication between the plurality of confidential containers and the virtual I/O device. Therefore, to enable the first confidential virtual machine to accurately locate the information about the status of communication between the first confidential container and the virtual I/O device from the virtual I/O device driver, it may be set that when each confidential container in the first confidential virtual machine communicates with the virtual I/O device, a communication request sent by each confidential container to the virtual I/O device carries an identity (identity document, ID) of the confidential container. In addition, when receiving the communication request of the confidential container, the virtual I/O device driver adds the communication request and the identity that is of the confidential container and that is carried in the communication request to a virtual queue in the virtual I/O device driver, so that when the first confidential virtual machine subsequently migrates the first confidential container, the first confidential virtual machine can accurately locate, based on the identity of the first confidential container from the virtual queue in the virtual I/O device driver, the communication request of the first confidential container to the virtual I/O device and response information returned by the virtual I/O device based on the communication request. The located information is the information about the status of communication between the first confidential container and the virtual I/O device.

S504: The processor of the first compute device 100 invokes a first communication interface in the first non-trusted execution environment to send the encrypted information to a second communication interface, where the first communication interface is a communication interface of the first compute device 100, and the second communication interface is a communication interface of the second compute device 200.

The communication interface may be a transceiver or an input/output interface. Optionally, the transceiver may include a transmitter device (transmitter) and a receiver device (receiver). Optionally, the transceiver may be a transceiver circuit. Optionally, the input/output interface may be an input/output circuit.

S505: After the second communication interface receives the encrypted information, the processor of the second compute device 200 obtains the encrypted information in the second non-trusted execution environment.

Specifically, after receiving the encrypted information, the second communication interface may store the encrypted information in a memory of the second non-trusted execution environment, so that the processor of the second compute device 200 may subsequently obtain the encrypted information from the memory of the second non-trusted execution environment.

S506: The processor of the second compute device 200 runs the second confidential virtual machine to decrypt the encrypted information by using the encryption key, to obtain the status information of the first confidential container.

S507: The processor of the second compute device 200 runs the second confidential virtual machine to synchronize the status of the standby confidential container with the status of the first confidential container based on the status information of the first confidential container.

It can be learned from the foregoing embodiments that, there are two cases of the status information of the first confidential container: The status information of the first confidential container includes only the information about the memory status of the first confidential container, or includes the information about the memory status of the first confidential container and the information about the status of communication between the first confidential container and the virtual I/O device. The following separately describes in detail a process in which the processor of the second compute device 200 runs the second confidential virtual machine to synchronize the status of the standby confidential container with the status of the first confidential container based on the status information of the first confidential container in the two cases.
(1) The status information of the first confidential container includes only the information about the memory status of the first confidential container.
   The processor of the second compute device 200 runs the second confidential virtual machine to load the information about the memory status of the first confidential container to a memory of the standby confidential container, to synchronize the memory status of the standby confidential container with the memory status of the first confidential container.
(2) The status information of the first confidential container includes the information about the memory status of the first confidential container and the information about the status of communication between the first confidential container and the virtual I/O device.

The processor of the second compute device 200 runs the second confidential virtual machine to load the information about the memory status of the first confidential container to the memory of the standby confidential container, and load the information about the status of communication between the first confidential container and the virtual I/O device to a virtual I/O device driver of the second confidential virtual machine. Then, the processor of the second compute device 200 runs the standby confidential container based on the information that is about the memory status of the first confidential container and that is in the standby confidential container and the information that is about the status of communication between the first confidential container and the virtual I/O device and that is in the virtual I/O device driver of the second confidential virtual machine, to synchronize the memory status of the standby confidential container with the memory status of the first confidential container, and synchronize a communication status of the standby confidential container with a communication status of the first confidential container.

It can be learned from the foregoing embodiments that, the information about the status of communication between the first confidential container and the virtual I/O device is originally located in the descriptor table, the available ring, and the used ring in the virtual I/O device driver of the first confidential virtual machine. In this application, the processor of the second compute device 200 may run the second confidential virtual machine to correspondingly add the information about the status of communication between the first confidential container and the virtual I/O device to a descriptor table, an available ring, and a used ring in the virtual I/O device driver of the second confidential virtual machine.

It can be further learned from the foregoing embodiments that, the information about the status of communication between the first confidential container and the virtual I/O device includes the identity of the first confidential container. Therefore, after the processor of the second compute device 200 runs the second confidential virtual machine to load the information about the status of communication between the first confidential container and the virtual I/O device to the virtual I/O device driver of the second confidential virtual machine, so that when subsequently running the standby confidential container, the processor of the second compute device 200 can accurately locate the information about the status of communication between the first confidential container and the virtual I/O device from the virtual I/O device driver of the second confidential virtual machine based on the identity of the first confidential container, thereby ensuring accurate migration.

S508: The processor of the second compute device 200 runs the standby confidential container.

Optionally, the processor of the first compute device 100 may also encrypt the status information of the first confidential container by using the encryption key in the first non-trusted execution environment.

Optionally, the processor of the second compute device 200 may also decrypt the encrypted information by using the encryption key in the second non-trusted execution environment.

It may be understood that, in a first implementation, the processor of the first compute device 100 runs the first confidential virtual machine to perform an encryption operation, and the processor of the second compute device 200 runs the second confidential virtual machine to perform a decryption operation; and in a second implementation, the processor of the first compute device 100 performs an encryption operation in the first non-trusted execution environment, and the processor of the second compute device 200 performs a decryption operation in the second non-trusted execution environment. Compared with the second implementation, because the first confidential virtual machine is located in the first TEE, the second confidential virtual machine is located in the second TEE, the first TEE is more secure than the first non-trusted execution environment, and the second TEE is more secure than the second non-trusted execution environment, the former implementation can better protect security of the status information of the first confidential container, and reduce a risk of leaking the status information of the first confidential container.

The following describes a specific implementation process of step S502 with reference to a schematic flowchart shown in FIG. 6.

S610: The processor of the first compute device 100 obtains a first public key and a first private key.

The first public key and the first private key may be generated by the processor of the first compute device 100, or may be generated by another key management device and then sent to the first compute device 100. When the first public key and the first private key are generated by the processor of the first compute device 100, the first public key and the first private key may be generated by the processor of the first compute device 100 in the first non-trusted execution environment, or may be generated in the first TEE, for example, generated by running the first confidential virtual machine in the first TEE. This is not specifically limited in this application.

After obtaining the first public key and the first private key, the processor of the first compute device 100 may store the first public key and the first private key in a memory of the first non-trusted execution environment, or may store the first public key and the first private key in a memory of the first TEE. It may be understood that, because the first TEE is more secure than the first non-trusted execution environment, storing the first private key in the memory of the first TEE is more secure than storing the first private key in the memory of the first non-trusted execution environment.

S620: The processor of the second compute device 200 obtains a second public key and a second private key.

The second public key and the second private key may be generated by the processor of the second compute device 200, or may be generated by another key management device and then sent to the second compute device 200. When the second public key and the second private key are generated by the processor of the second compute device 200, the second public key and the second private key may be generated by the processor of the second compute device 200 in the second non-trusted execution environment, or may be generated in the second TEE, for example, generated by running the second confidential virtual machine in the second TEE. This is not specifically limited in this application.

After obtaining the second public key and the second private key, the processor of the second compute device 200 may store the second public key and the second private key in a memory of the second non-trusted execution environment, or may store the second public key and the second private key in a memory of the second TEE. It may be understood that, because the second TEE is more secure than the second non-trusted execution environment, storing the second private key in the memory of the second TEE is more secure than storing the second private key in the memory of the second non-trusted execution environment.

S630: The processor of the first compute device 100 invokes the first communication interface in the first non-trusted execution environment to send the first public key to the second communication interface.

S640: The processor of the second compute device 200 invokes the second communication interface in the second non-trusted execution environment to send the second public key to the first communication interface.

S650: After the first communication interface receives the second public key, the processor of the first compute device 100 obtains the second public key in the first non-trusted execution environment.

Specifically, after receiving the second public key, the first communication interface may store the second public key in the memory of the first non-trusted execution environment, so that the processor of the first compute device 100 may subsequently obtain the second public key from the memory of the first non-trusted execution environment.

S660: After the second communication interface receives the first public key, the processor of the second compute device 200 obtains the first public key in the second non-trusted execution environment.

Specifically, after receiving the first public key, the second communication interface may store the first public key in the memory of the second non-trusted execution environment, so that the processor of the second compute device 200 may subsequently obtain the first public key from the memory of the second non-trusted execution environment.

S670: The processor of the first compute device 100 generates an encryption key based on the first private key and the second public key.

In a possible embodiment, the processor of the first compute device 100 generates the encryption key in the first TEE based on the first private key and the second public key. For example, the first compute device 100 runs the first confidential virtual machine to generate the encryption key based on the first private key and the second public key.

In another possible embodiment, the processor of the first compute device 100 generates the encryption key in the first non-trusted execution environment based on the first private key and the second public key.

After generating the encryption key, the processor of the first compute device 100 may store the encryption key in the memory of the first non-trusted execution environment or the memory of the first TEE.

S680: The processor of the second compute device 200 generates an encryption key based on the second private key and the first public key.

In a possible embodiment, the processor of the second compute device 200 generates the encryption key in the second TEE based on the second private key and the first public key. For example, the second compute device 200 runs the second confidential virtual machine to generate the encryption key based on the second private key and the first public key.

In another possible embodiment, the processor of the second compute device 200 generates the encryption key in the second non-trusted execution environment based on the second private key and the first public key.

After generating the encryption key, the processor of the second compute device 200 may store the encryption key in the memory of the second non-trusted execution environment or the memory of the second TEE.

It may be understood that, in a first implementation, the processor of the first compute device 100 generates the encryption key in the first TEE based on the first private key and the second public key, the processor of the second compute device 200 generates the encryption key in the second TEE based on the second private key and the first public key, the processor of the first compute device 100 stores the encryption key in the memory of the first TEE, and the processor of the second compute device 200 stores the encryption key in the memory of the second TEE; and in a second implementation, the processor of the first compute device 100 generates the encryption key in the first non-trusted execution environment based on the first private key and the second public key, the processor of the second compute device 200 generates the encryption key in the second non-trusted execution environment based on the second private key and the first public key, the processor of the first compute device 100 stores the encryption key in the memory of the first non-trusted execution environment, and the processor of the second compute device 200 stores the encryption key in the memory of the second non-trusted execution environment. Compared with the second implementation, because the first TEE is more secure than the first non-trusted execution environment, and the second TEE is more secure than the second non-trusted execution environment, the first implementation can better protect security of the encryption key, thereby better protecting security of the status information of the first confidential container, and reducing a risk of leakage of the status information of the first confidential container.

It may be further understood that, in the key negotiation process shown in FIG. 6, operations performed by the processor of the first compute device 100/the second compute device 200 in the first TEE/the second TEE are all performed by the processor of the first compute device 100/the second compute device 200 by running the first confidential virtual machine/the second confidential virtual machine. Because the first confidential virtual machine is isolated from another confidential virtual machine in the first compute device 100, and the second confidential virtual machine is isolated from another confidential virtual machine in the second compute device 200, the first private key is known only to the first confidential virtual machine, the second private key is known only to the second confidential virtual machine, and the encryption key is known only to the first confidential virtual machine and the second confidential virtual machine. In addition, the another confidential virtual machine in the first compute device 100 does not know the first private key and the encryption key, and the another confidential virtual machine in the second compute device 200 does not know the second private key and the encryption key. Therefore, a risk of leakage of the status information of the first confidential container can be further reduced, and data security can be better protected.

The following describes the steps shown in FIG. 6 with reference to two specific examples.

Example 1: In S601, the first private key generated by the processor of the first compute device 100 by running the first confidential virtual machine is a random number a, and the first public key is A=g^a(mod p). In S602, the second private key generated by the processor of the second compute device 200 by running the second confidential virtual machine is a random number b, and the second public key is B=g^b(mod p), where g and p may be preset in the processor of the first compute device 100 and the processor of the second compute device 200, or may be pre-negotiated by the processor of the first compute device 100 and the processor of the second compute device 200. Then, in S603 and S604, the processor of the first compute device 100 runs the first confidential virtual machine, and the processor of the second compute device 2000 runs the second confidential virtual machine to exchange public keys. Then, in S605, the processor of the first compute device 100 runs the first confidential virtual machine to obtain the encryption key S=B^a(mod p) by performing an operation based on B, a, and p. In S606, the processor of the second compute device 200 runs the second confidential virtual machine to obtain the encryption key S=A^b(mod p) by performing an operation based on A, b, and p.

Example 2: In S601, the first private key generated by the processor of the first compute device 100 by running the first confidential virtual machine is a random number a, and the first public key is A=a*Q(x, y). In S602, the second private key generated by the processor of the second compute device 200 by running the second confidential virtual machine is a random number b, and the second public key is B=b*Q(x, y), where Q(x, y) may be pre-negotiated by the processor of the first compute device 100 and the processor of the second compute device 200, for example, a pre-negotiated base point G on an elliptic curve. Then, in S603 and S604, the first compute device 100 and the second compute device 200 exchange public keys. Then, in S605, the processor of the first compute device 100 runs the first confidential virtual machine to calculate the encryption key S=a*B=a*b*Q(x, y) based on the first private key a and the second public key B. In S606, the processor of the second compute device 200 may run the second confidential virtual machine to calculate the encryption key S=b*A=b*a*Q(x, y) based on the second private key b and the first public key A.

It should be understood that the foregoing example 1 and example 2 are merely examples of implementations in which the processor of the first compute device 100 and the processor of the second compute device 200 negotiate to obtain the encryption key, and should not be construed as a specific limitation.

It can be learned that, in the foregoing example 1 and example 2, the first confidential virtual machine and the second confidential virtual machine generate the encryption key based on public information (that is, a public key of a peer end) and private information (that is, a private key) held by each other, and the private information is not transmitted between the first confidential virtual machine and the second confidential virtual machine. Even if the public information is stolen during transmission, because the private information is not leaked, the encryption key cannot be stolen. Therefore, security of the status information that is of the first container and that is subsequently encrypted by using the encryption key can be protected during transmission. In addition, both the first confidential virtual machine and the second confidential virtual machine are located in the TEEs. Because the TEEs have high security, security of the encryption key can be well protected.

On a basis that the processor of the first compute device 100 runs the first confidential virtual machine and the processor of the second compute device 200 runs the second confidential virtual machine to obtain the encryption key through negotiation, to further protect security of the status information of the first confidential container, in a possible embodiment, before the processor of the first compute device 100 runs the first confidential virtual machine and the processor of the second compute device 200 runs the second confidential virtual machine to perform key negotiation, the processor of the first compute device 100 may run the first confidential virtual machine to send an authentication request to the second confidential virtual machine, to request to obtain authentication information of the second confidential virtual machine, to authenticate the second confidential virtual machine. In addition, if the second confidential virtual machine is authenticated, the processor of the first compute device 100 negotiates with the second confidential virtual machine to obtain the encryption key, or if the second confidential virtual machine fails to be authenticated, key negotiation is not performed.

Specifically, the processor of the first compute device 100 may run the first confidential virtual machine to generate the authentication request, and then invoke the first communication interface in the first non-trusted execution environment to send the authentication request to the second communication interface. After the second communication interface receives the authentication request, the processor of the second compute device 200 runs the second confidential virtual machine to obtain the authentication information of the second confidential virtual machine based on the authentication request, and then invokes the second communication interface in the second non-trusted execution environment to return the authentication information of the second confidential virtual machine to the first communication interface. After receiving the authentication information of the second confidential virtual machine, the first communication interface may store the authentication information of the second confidential virtual machine in the memory of the first non-trusted execution environment, so that the processor of the first compute device 100 may subsequently obtain the authentication information of the second confidential virtual machine from the memory of the first non-trusted execution environment, and run the first confidential virtual machine to authenticate the second confidential virtual machine based on the authentication information of the second confidential virtual machine.

The authentication information of the second confidential virtual machine may include a current measurement value of a configuration of the second confidential virtual machine and a historical measurement value of the configuration of the second confidential virtual machine. Optionally, the authentication information of the second confidential virtual machine may include a certificate (or may be a certificate chain) of the second confidential virtual machine, and the historical measurement value of the configuration of the second confidential virtual machine may be carried in the certificate of the second confidential virtual machine. The configuration of the second confidential virtual machine may include a type of a virtual processor core, a quantity of virtual processor cores, a memory address, a name and a version of an APP installed on the second confidential virtual machine, and an image of the second confidential virtual machine. The measurement value of the configuration is used to measure whether the configuration is tampered with. For example, a current quantity of virtual processor cores is compared with a historical quantity that is of virtual processor cores and that is recorded in the certificate. If the two quantities are the same, it indicates that the quantity of virtual processor cores is not tampered with. Alternatively, if the two quantities are not the same, it indicates that the quantity of virtual processor cores is tampered with (increased or decreased). For another example, a current hash value of the image of the second confidential virtual machine is compared with a historical hash value that is of the image of the second confidential virtual machine and that is recorded in the certificate. If the two hash values are the same, it indicates that the image is not tampered with. Alternatively, if the two hash values are not the same, it indicates that the image is tampered with. In this application, that the configuration of the second confidential virtual machine is tampered with may be understood as that the second confidential virtual machine is incomplete and is a non-trusted virtual machine.

Optionally, the authentication information of the second confidential virtual machine may include identity information of the second confidential virtual machine, and the identity information is used to uniquely identify and recognize the second confidential virtual machine. The identity information of the second confidential virtual machine may include a name, a universally unique identifier (universally unique identifier, UUID), a media access control address (media access control address, MAC address), operating system information (such as a type and a version number of an operating system), and virtual hardware information (such as a quantity of CPU cores, a memory size, a disk capacity, and a device configuration) of the second confidential virtual machine. It may be understood that the processor of the first compute device 100 runs the first confidential virtual machine to authenticate an identity of the second confidential virtual machine based on the identity information of the second confidential virtual machine. If the identity is authenticated, it is determined that the second confidential virtual machine is a trusted virtual machine; or if the identity fails to be authenticated, it is determined that the second confidential virtual machine is a non-trusted virtual machine. Optionally, the certificate of the second confidential virtual machine further includes identity information, a validity period of the certificate, a certificate authority, a digital signature of the certificate, and the like provided when the second confidential virtual machine applies for the certificate.

Specifically, the processor of the first compute device 100 may run the first confidential virtual machine to first authenticate validity and integrity of the certificate of the second confidential virtual machine, for example, determine whether the certificate is valid based on the validity period of the certificate, determine whether the certificate authority is a valid authority, and determine whether the certificate is tampered with based on the digital signature of the certificate. When determining that the certificate is valid and complete, the processor of the first compute device 100 determines whether the second confidential virtual machine is a trusted virtual machine by checking the current measurement value of the configuration of the second confidential virtual machine and the certificate, and/or by checking whether the identity information of the second confidential virtual machine matches the identity information recorded in the certificate.

To protect security of the second compute device 200 and the second confidential virtual machine in the second compute device 200, in a possible embodiment, before the processor of the second compute device 200 runs the second confidential virtual machine and the processor of the first compute device 100 runs the first confidential virtual machine to obtain the encryption key through negotiation, the processor of the first compute device 100 may further run the first confidential virtual machine to send authentication information of the first confidential virtual machine to the second confidential virtual machine, so that the second compute device 200 authenticates the first confidential virtual machine based on the authentication information. If the authentication information is authenticated, the second compute device 200 negotiates with the first compute device 100 to obtain the encryption key. Alternatively, if the authentication information fails to be authenticated, key negotiation is not performed. Optionally, the authentication information of the first confidential virtual machine may be carried in the authentication request sent by the first confidential virtual machine to the second confidential virtual machine. In other words, the authentication request is further used to request the second confidential virtual machine to authenticate the first confidential virtual machine based on the authentication information of the first confidential virtual machine.

Specifically, the processor of the second compute device 200 may run the first confidential virtual machine to obtain the authentication information of the first confidential virtual machine, and generate an authentication request that carries the authentication information of the first confidential virtual machine. Then, the processor of the second compute device 200 invokes the first communication interface in the first non-trusted execution environment to send the authentication request to the second communication interface. After receiving the authentication request, the second communication interface may store the authentication information that is of the first confidential virtual machine and that is carried in the authentication request in the memory of the second non-trusted execution environment, so that the processor of the second compute device 200 may subsequently obtain the authentication information of the first confidential virtual machine from the memory of the second non-trusted execution environment, and run the second confidential virtual machine to authenticate the first confidential virtual machine based on the authentication information of the first confidential virtual machine.

The authentication information of the first confidential virtual machine may include a current measurement value of a configuration of the first confidential virtual machine and a historical measurement value of the configuration of the first confidential virtual machine. Optionally, the authentication information of the first confidential virtual machine may include a certificate (or may be a certificate chain) of the first confidential virtual machine, and the historical measurement value of the configuration of the first confidential virtual machine may be carried in the certificate of the first confidential virtual machine. The configuration of the first confidential virtual machine may include a type of a virtual processor core, a quantity of virtual processor cores, a memory address, a name and a version of an APP installed on the first confidential virtual machine, and an image of the first confidential virtual machine. The measurement value of the configuration is used to measure whether the configuration is tampered with. For example, a current quantity of virtual processor cores is compared with a historical quantity that is of virtual processor cores and that is recorded in the certificate. If the two quantities are the same, it indicates that the quantity of virtual processor cores is not tampered with; or if the two quantities are not the same, it indicates that the quantity of virtual processor cores is tampered with (increased or decreased). For another example, a current hash value of the image of the first confidential virtual machine is compared with a historical hash value that is of the image of the first confidential virtual machine and that is recorded in the certificate. If the two hash values are the same, it indicates that the image is not tampered with; or if the two hash values are not the same, it indicates that the image is tampered with. In this application, that the configuration of the first confidential virtual machine is tampered with may be understood as that the first confidential virtual machine is incomplete and is a non-trusted virtual machine.

Optionally, the authentication information of the first confidential virtual machine may include identity information of the first confidential virtual machine, and the identity information is used to uniquely identify and recognize the first confidential virtual machine. The identity information of the first confidential virtual machine may include a name, a universally unique identifier (universally unique identifier, UUID), a media access control address (media access control address, MAC address), operating system information (such as a type and a version number of an operating system), virtual hardware information (such as a quantity of CPU cores, a memory size, a disk capacity, and a device configuration) of the first confidential virtual machine. It may be understood that the processor of the second compute device 200 runs the second confidential virtual machine to authenticate an identity of the first confidential virtual machine based on the identity information of the first confidential virtual machine. If the identity is authenticated, it is determined that the first confidential virtual machine is a trusted virtual machine; or if the identity fails to be authenticated, it is determined that the first confidential virtual machine is a non-trusted virtual machine. Optionally, the certificate of the first confidential virtual machine further includes identity information, a validity period of the certificate, a certificate authority, a digital signature of the certificate, and the like provided when the first confidential virtual machine applies for the certificate.

Specifically, the processor of the second compute device 200 runs the second confidential virtual machine to first authenticate validity and integrity of the certificate of the first confidential virtual machine, for example, determine whether the certificate is valid based on the validity period of the certificate, determine whether the certificate authority is a valid authority, and determine whether the certificate is tampered with based on the digital signature of the certificate. When determining that the certificate is valid and complete, the processor of the second compute device 200 determines whether the first confidential virtual machine is a trusted virtual machine by checking whether the current measurement value of the configuration of the first confidential virtual machine is consistent with (the same as) the historical measurement value that is of the configuration of the first confidential virtual machine and that is recorded in the certificate, and/or determines whether the first confidential virtual machine is a trusted virtual machine by checking whether the identity information of the first confidential virtual machine matches the identity information recorded in the certificate.

In a possible embodiment, after the processor of the first compute device 100 and the processor of the second compute device 200 obtain the encryption key through negotiation, and before the processor of the first compute device 100 encrypts the status information of the first confidential virtual machine by using the encryption key, the processor of the first compute device 100 may further verify validity of the encryption key, that is, verify whether the encryption key held by the processor of the first compute device 100 is the same as the encryption key held by the processor of the second compute device 200, to ensure that a migration process of the first confidential container is accurately performed.

Specifically, the processor of the first compute device 100 may verify validity of the encryption key in the following manner:

After the processor of the first compute device 100 and the processor of the second compute device 200 obtain the encryption key through negotiation, the processor of the second compute device 200 may generate a message authentication code (to distinguish from a message authentication code generated by the processor of the first compute device 100 in the following, the message authentication code generated by the processor of the second compute device 200 is referred to as a second message authentication code, and a message authentication code generated by the processor of the first compute device 100 is referred to as a first message authentication code) in the second non-trusted execution environment/second TEE based on the encryption key and a first message, and invoke the second communication interface in the second non-trusted execution environment to send the second message authentication code and the first message to the first communication interface. After receiving the second message authentication code and the first message, the first communication interface may store the second message authentication code and the first message in the memory of the first non-trusted execution environment, so that the processor of the first compute device 100 may subsequently obtain the second message authentication code and the first message from the memory of the first non-trusted execution environment, generate the first message authentication code in the first non-trusted execution environment/first TEE based on the encryption key held by the processor of the first compute device 100 and the first message, and then compare the first message authentication code with the second message authentication code. When determining that the two message authentication codes are the same, the processor of the first compute device 100 determines that the encryption key held by the processor of the first compute device 100 is valid; or when determining that the two message authentication codes are not the same, the processor of the first compute device 100 determines that the encryption key held by the processor of the first compute device 100 is invalid.

It may be understood that, in a first implementation, the processor of the second compute device 200 generates the second message authentication code in the second TEE, and the processor of the first compute device 100 generates the first message authentication code in the first TEE; and in a second implementation, the processor of the second compute device 200 generates the second message authentication code in the second non-trusted execution environment, and the processor of the first compute device 100 generates the first message authentication code in the first non-trusted execution environment. Compared with the second implementation, because the first TEE is more secure than the first non-trusted execution environment, and the second TEE is more secure than the second non-trusted execution environment, the first implementation can better protect security of the encryption key, thereby better protecting security of the status information of the first confidential container, and reducing a risk of leakage of the status information of the first confidential container.

In a more specific embodiment, on a basis that the processor of the first compute device 100 runs the first confidential virtual machine and the processor of the second compute device 200 runs the second confidential virtual machine to obtain the encryption key through negotiation, that the processor of the second compute device 200 generates the second message authentication code in the second TEE may be as follows: The processor of the second compute device 200 generates the second message authentication code by running the second confidential virtual machine, and that the processor of the first compute device 100 generates the first message authentication code in the first TEE may be as follows: The processor of the first compute device 100 generates the first message authentication code by running the first confidential virtual machine. Compared with a manner in which the processor of the second compute device 200 generates the second message authentication code by running other software (for example, running the second virtual machine manager) in the second TEE and the processor of the first compute device 100 generates the first message authentication code by running other software (for example, running the first virtual machine manager) in the first TEE, because the second confidential virtual machine is isolated from another confidential virtual machine in the second TEE, the second confidential virtual machine and the another confidential virtual machine in the second TEE share the second virtual machine manager, the first confidential virtual machine is isolated from another confidential virtual machine in the first TEE, and the first confidential virtual machine and the another confidential virtual machine in the first TEE share the first virtual machine manager, generating a message authentication code by the second confidential virtual machine and the first confidential virtual machine can better protect security of the encryption key, thereby better protecting security of the status information of the first confidential container, and reducing a risk of leakage of the status information of the first confidential container.

In a specific implementation, a manner in which the processor of the second compute device 200 generates the second message authentication code based on the encryption key held by the processor of the second compute device 200 and the first message, and a manner in which the processor of the first compute device 100 generates the first message authentication code based on the encryption key held by the processor of the first compute device 100 and the first message may be as follows: The encryption key and the first message are signed by using a same signature algorithm, and obtained signature information is the message authentication code. The signature algorithm includes but is not limited to RSA, DSA, and the like.

It can be learned from FIG. 3 that the first virtual machine manager is deployed in the first TEE, the second virtual machine manager is deployed in the second TEE, the third virtual machine manager is deployed in the first non-trusted execution environment, and the fourth virtual machine manager is deployed in the second non-trusted execution environment. In a possible embodiment, an operation of invoking the first communication interface performed by the processor of the first compute device 100 in the first non-trusted execution environment may be performed by the processor of the first compute device 100 by running the third virtual machine manager, and an operation of invoking the second communication interface performed by the processor of the second compute device 200 in the second non-trusted execution environment may be performed by the processor of the second compute device 200 by running the fourth virtual machine manager.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing describes in detail the container migration method and system provided in this application. Based on a same inventive idea, the following further describes a container migration apparatus and a compute device provided in this application.

It should be understood that internal unit modules of the container migration apparatus may alternatively be divided in a plurality of manners. The modules may be software modules or hardware modules; or a part of the modules may be software modules, and a part of the modules may be hardware modules. This is not limited in this application.

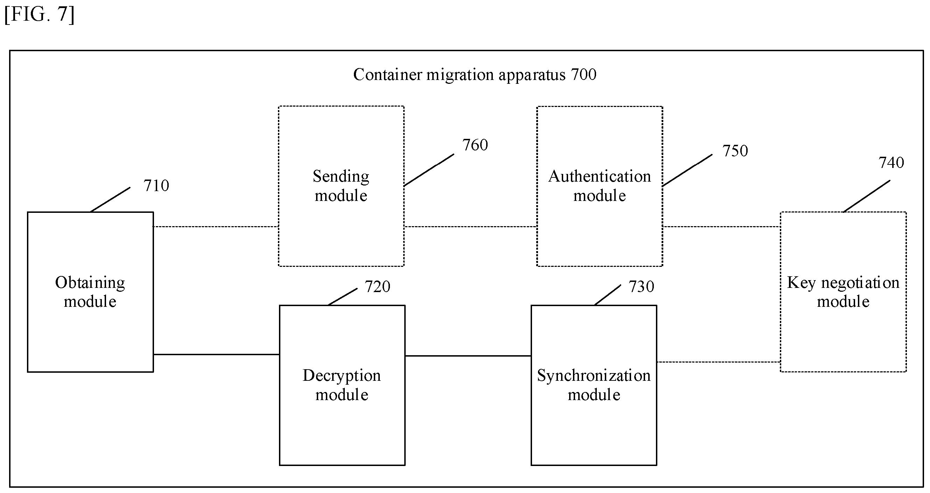

FIG. 7 is a diagram of a structure of another container migration apparatus 700 according to an embodiment of this application. The apparatus 700 may be used in the second compute device 200 shown in FIG. 3. As shown in FIG. 7, the apparatus 700 includes an obtaining module 710, a decryption module 720, and a synchronization module 730.

The following describes functions of the modules in the container migration apparatus 700 by using examples. It should be understood that the functions of the modules described in the following examples are merely functions that the container migration apparatus 700 may have in some embodiments of this application. The functions of the modules are not limited in this application.

The obtaining module 710 is configured to obtain encrypted information of status information of a first confidential container, where the first confidential container is deployed in a first TEE, and the first TEE is a TEE of a first compute device 100.

The decryption module 720 is configured to decrypt the encrypted information to obtain the status information of the first confidential container.

The synchronization module 730 is configured to synchronize a status of a standby confidential container with a status of the first confidential container based on the status information of the first confidential container.

In some possible embodiments, the status of the first confidential container includes a memory status of the first confidential container, or the status of the first confidential container includes a memory status of the first confidential container and a status of communication between the first confidential container and a virtual I/O device.

In some possible embodiments, the second TEE includes a second confidential virtual machine, the standby confidential container is deployed on the second confidential virtual machine, the obtaining module 710 is deployed in a second non-trusted execution environment, and the decryption module 720 is deployed on the second confidential virtual machine.

In some possible embodiments, as shown in FIG. 7, the apparatus 700 further includes a key negotiation module 740, deployed on the second confidential virtual machine. The encrypted information is obtained by encrypting the status information of the first confidential container by using an encryption key, the encryption key is obtained by the key negotiation module 740 and a first confidential virtual machine through negotiation, the encryption key is further used to decrypt the encrypted information, the first confidential virtual machine is deployed in the first TEE, and the first confidential container is deployed on the first confidential virtual machine.

In some possible embodiments, as shown in FIG. 7, the apparatus 700 further includes an authentication module 750, deployed on the second confidential virtual machine.

The obtaining module 710 is further configured to obtain authentication information of the first confidential virtual machine.

The key negotiation module 740 is configured to: when the authentication module 750 authenticates the first confidential virtual machine based on the authentication information of the first confidential virtual machine, negotiate with the first confidential virtual machine to obtain the encryption key.

In some possible embodiments, as shown in FIG. 7, the apparatus 700 further includes a sending module 760, deployed in the second non-trusted execution environment.

The authentication module 750 is further configured to obtain authentication information of the second confidential virtual machine.

The sending module 760 is configured to invoke a second communication interface to send the authentication information of the second confidential virtual machine to a first communication interface, where the second communication interface is a communication interface of the second compute device 200, and the first communication interface is a communication interface of the first compute device 100.

In some possible embodiments, the authentication information of the first confidential virtual machine includes a current measurement value of a configuration of the first confidential virtual machine and a historical measurement value of the configuration of the first confidential virtual machine.

The authentication module 750 is configured to: when it is determined that the current measurement value of the configuration of the first confidential virtual machine is the same as the historical measurement value of the configuration of the first confidential virtual machine, authenticate the first confidential virtual machine.

In some possible embodiments, the authentication module 750 is further configured to generate a message authentication code based on the encryption key and a first message; and the sending module 760 is further configured to invoke the second communication interface to send the first message and the message authentication code to the first communication interface.

In some possible embodiments, information about the status of communication between the first confidential container and the virtual I/O device includes an identity of the first confidential container.

The synchronization module 730 is specifically configured to: load information about the memory status of the first confidential container to a memory of the standby confidential container, and load the information about the status of communication between the first confidential container and the virtual I/O device to a virtual I/O device driver of the second confidential virtual machine; and run the standby confidential container based on the information that is about the memory status of the first confidential container and that is in the memory of the standby confidential container and the information that is about the status of communication between the first confidential container and the virtual I/O device and that is located in the virtual I/O device driver based on the identity of the first confidential container, to synchronize a memory status of the standby confidential container with the memory status of the first confidential container, and synchronize a communication status of the standby confidential container with a communication status of the first confidential container.

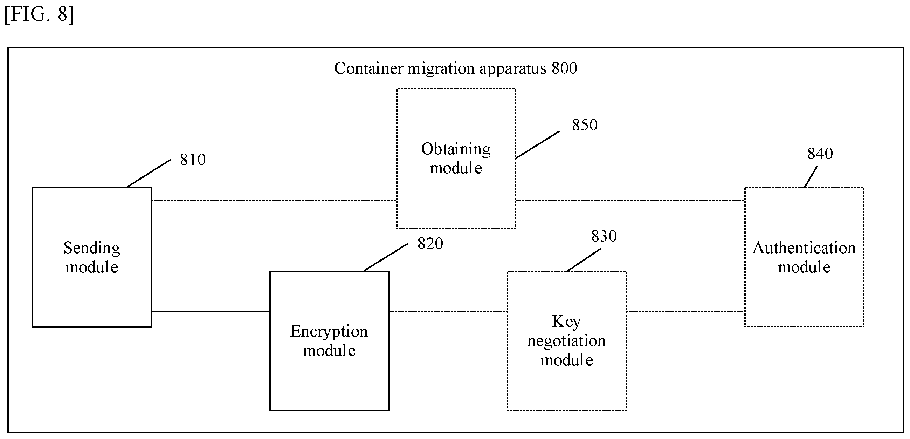

FIG. 8 is a diagram of a structure of a container migration apparatus 800 according to an embodiment of this application. The apparatus 800 may be used in the first compute device 100 shown in FIG. 3. As shown in FIG. 8, the apparatus 800 includes a sending module 810 and an encryption module 820.

The following describes functions of the modules in the container migration apparatus 800 by using examples. It should be understood that the functions of the modules described in the following examples are merely functions that the container migration apparatus 800 may have in some embodiments of this application. The functions of the modules are not limited in this application.

The encryption module 820 is configured to encrypt status information of a first confidential container in a first TEE to obtain encrypted information.

The sending module 810 is configured to invoke a first communication interface in a first non-trusted execution environment to send the encrypted information to a second compute device 200, where the encrypted information is used to migrate the status information of the first confidential container to a standby confidential container, the standby confidential container is deployed in a second TEE, the second TEE is a TEE of the second compute device 200, and the first communication interface is a communication interface of the first compute device 100.

In some possible embodiments, a status of the first confidential container includes a memory status of the first confidential container, or a status of the first confidential container includes a memory status of the first confidential container and a status of communication between the first confidential container and a virtual I/O device.

In some possible embodiments, the first TEE includes a first confidential virtual machine, and the first confidential container is located in the first confidential virtual machine; the encryption module 820 is deployed on the first confidential virtual machine, and the sending module 810 is deployed in the first non-trusted execution environment.

In some possible embodiments, as shown in FIG. 8, the apparatus 800 further includes a key negotiation module 830, deployed on the first confidential virtual machine. The encrypted information is obtained by encrypting the status information of the first confidential container by using an encryption key, the encryption key is obtained by the key negotiation module 830 and a second confidential virtual machine through negotiation, and the encryption key is further used to decrypt the encrypted information.

In some possible embodiments, as shown in FIG. 8, the apparatus 800 further includes an authentication module 840, deployed on the first confidential virtual machine.

The authentication module 840 is configured to obtain authentication information of the first confidential virtual machine.

The sending module 810 is configured to invoke the first communication interface to send the authentication information of the first confidential virtual machine to the second communication interface.

In some possible embodiments, as shown in FIG. 8, the apparatus 800 further includes an obtaining module 850, deployed in the first non-trusted execution environment, and the obtaining module 850 is further configured to obtain authentication information of the second confidential virtual machine.

The key negotiation module 830 is configured to: when the authentication module 840 authenticates the second confidential virtual machine based on the authentication information of the second confidential virtual machine, negotiate with the second confidential virtual machine to obtain the encryption key.

In some possible embodiments, the authentication information of the second confidential virtual machine includes a current measurement value of a configuration of the second confidential virtual machine and a historical measurement value of the configuration of the second confidential virtual machine.

The authentication module 840 is configured to: when it is determined that the current measurement value of the configuration of the second confidential virtual machine is the same as the historical measurement value of the configuration of the second confidential virtual machine, authenticate the second confidential virtual machine.

In some possible embodiments, the obtaining module 850 is configured to obtain a first message and a message authentication code from the second confidential virtual machine, where the message authentication code is generated by the second confidential virtual machine based on the encryption key and the first message.

The encryption module 820 is configured to: when the authentication module 840 determines, based on the first message and the message authentication code, that the encryption key is a valid key, encrypt the status information of the first confidential container by using the encryption key.

In some possible embodiments, information about the status of communication between the first confidential container and the virtual I/O device includes an identity of the first confidential container. Before the encryption module 820 is configured to encrypt the status information of the first confidential container to obtain the encrypted information, the encryption module 820 is further configured to: locate, in a virtual I/O device driver of the first confidential virtual machine based on the identity of the first confidential container, the information about the status of communication between the first confidential container and the virtual I/O device.

Specifically, for specific implementations of performing various operations by the container migration apparatus 700 and the container migration apparatus 800, refer to descriptions in the related content in the foregoing container migration method embodiments. For brevity of the specification, details are not described herein again.

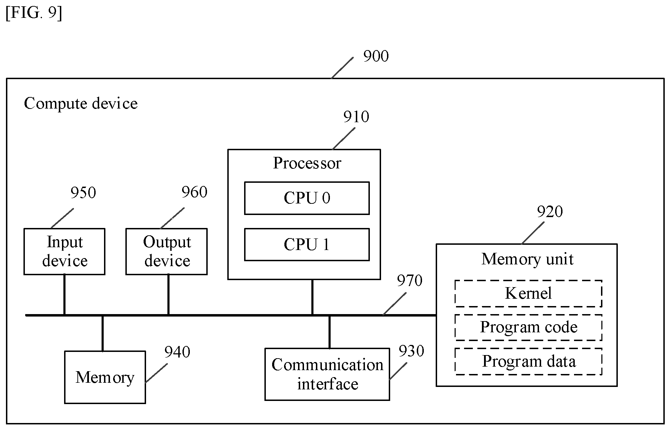

FIG. 9 is a diagram of a structure of a compute device 900 according to an embodiment of this application. The compute device 900 includes a processor 910, a memory unit 920, a communication interface 930, a memory 940, an input device 950, and an output device 960. The processor 910, the memory unit 920, the communication interface 930, the memory 940, the input device 950, and the output device 960 may be connected to each other via a bus 970.

The processor 910 may read program code (including instructions) stored in the memory unit 920, and execute the program code stored in the memory unit 920, to enable the compute device 900 to perform the steps performed by the first compute device 100 or the second compute device 200 in the container migration methods provided in the foregoing method embodiments.

The processor 910 may have a plurality of specific implementation forms. For example, the processor 910 may be at least one CPU, as shown in FIG. 9, including a CPU 0 and a CPU 1. Alternatively, the processor 910 may be a graphics processing unit (graphics processing unit, GPU), or the like. Alternatively, the processor 910 may be a single-core processor or a multi-core processor. The processor 910 may be a combination of a CPU and a hardware chip. The hardware chip may be implemented by using an application-specific integrated circuit (application-specific integrated circuit, ASIC) or a programmable logic device (programmable logic device, PLD). The PLD may be implemented by a complex programmable logical device (complex programmable logical device, CPLD), a field-programmable gate array (field-programmable gate array, FPGA), generic array logic (generic array logic, GAL), or any combination thereof. The processor 910 may alternatively be implemented independently by using a logic device with built-in processing logic, for example, an FPGA or a digital signal processor (digital signal processor, DSP).

The memory unit 920 is configured to store a kernel, program code, and program data generated when the processor 910 executes the program code stored in the memory unit 920.

When the compute device 900 is configured to perform the steps performed by the second compute device 200 in the container migration methods provided in the foregoing method embodiments, the program code stored in the memory unit 920 includes code of the obtaining module 710, code of the decryption module 720, code of the synchronization module 730, code of the key negotiation module 740, code of the authentication module 750, code of the sending module 760, and the like, and the program data stored in the memory unit 920 includes an encryption key, status information of a first confidential container, encrypted information, and the like.

When the compute device 900 is configured to perform the steps performed by the first compute device 100 in the container migration methods provided in the foregoing method embodiments, the program code stored in the memory unit 920 includes code of the sending module 810, code of the encryption module 820, code of the key negotiation module 830, code of the authentication module 840, code of the obtaining module 850, and the like, and the program data stored in the memory unit 920 includes an encryption key, status information of a first confidential container, encrypted information, and the like.

The communication interface 930 may be a wired interface (for example, an Ethernet interface, an optical fiber interface, or another type of interface (for example, an infiniBand (infiniBand, IB) interface)) or a wireless interface (for example, a cellular network interface or a wireless local area network interface), and is configured to communicate with another compute device or apparatus. When the communication interface 930 is a wired interface, the communication interface 930 may use a protocol suite on top of a transmission control protocol/internet protocol (transmission control protocol/internet protocol, TCP/IP), for example, a remote function call (remote function call, RFC) protocol, a simple object access protocol (simple object access protocol, SOAP) protocol, a simple network management protocol (simple network management protocol, SNMP) protocol, a common object request broker architecture (common object request broker architecture, CORBA) protocol, a distributed protocol, and the like.

The memory 940 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 940 may alternatively be a volatile memory. The volatile memory may be a random access memory (random access memory, RAM), and is used as an external cache.

The input device 950 may include a mouse, a keyboard, and the like. A user may input data or instructions to the compute device 900 via the input device 950, for example, input a container migration instruction (the instruction indicates migration of the first confidential container).

The output device 960 may include a display. The compute device 900 may provide data for the user via the display. For example, after migration of the first confidential container is completed, the compute device 900 displays a migration completion notification to the user. The display may include a cathode ray tube (cathode ray tube, CRT) display, a plasma display panel (plasma display panel, PDP), a liquid crystal display (liquid crystal display, LCD), and the like. For example, the display is an LCD. The liquid crystal display includes a liquid crystal panel and a backlight module. The liquid crystal display panel includes a polarization film, a glass substrate, a black matrix, a color filter, a protective film, a common electrode, a calibration layer, a liquid crystal layer (liquid crystal, a spacer, and a sealant), a capacitor, a display electrode, a prism layer, and a light diffusion layer. The backlight module includes an illumination light source, a reflection panel, a light guide panel, a diffusion sheet, a brightness enhancement film (prismatic lens), a frame, and the like.

The bus 970 may be a PCIE bus, an extended industry standard architecture (extended industry standard architecture, EISA for short) bus, or the like. The bus 970 may be classified into an address bus, a data bus, a control bus, and the like. For ease of representation, the bus is represented by using only one bold line in FIG. 9. However, this does not mean that there is only one bus or only one type of bus.

It should be understood that the compute device 900 in this embodiment of this application may correspond to the compute device that includes the container migration apparatus 700 or the container migration apparatus 800 in embodiments of this application, and may correspond to a corresponding body that performs the methods shown in FIG. 4, FIG. 5, or FIG. 6 in embodiments of this application. In addition, operations and/or functions of the modules in the compute device 900 are respectively used to implement corresponding procedures of the methods shown in FIG. 4, FIG. 5, and FIG. 6. For brevity, details are not described herein again.

It should be understood that the compute device 900 is merely an example provided in this embodiment of this application, and the compute device 900 may have more or fewer components than those shown in FIG. 9, may combine two or more components, or may have different component configurations.

An embodiment of this application further provides a container migration system. The system may include the container migration apparatus 700 and the container migration apparatus 800.

An embodiment of this application further provides a computer-readable storage medium. The computer-readable storage medium stores instructions. When the instructions are run, a part or all of the steps of the container migration methods recorded in the foregoing embodiments may be implemented.

An embodiment of this application further provides a computer program product. When the computer program product is read and executed by a computer, a part or all of the steps of the container migration methods described in the foregoing method embodiments may be implemented.

In the foregoing embodiments, descriptions of each embodiment have respective focus. For a part that is not described in detail in an embodiment, refer to related descriptions in other embodiments.

All or a part of the foregoing embodiments may be implemented by using software, hardware, or any combination thereof. When the foregoing embodiments are implemented by using software, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A container migration system, wherein the system comprises a first compute device and a second compute device, software and hardware resources of the first compute device are divided into a first trusted execution environment TEE and a first non-trusted execution environment, software and hardware resources of the second compute device are divided into a second TEE and a second non-trusted execution environment, the first TEE comprises a first container, and the second TEE comprises a standby container;
the first compute device is configured to send encrypted information of status information of the first container to the second compute device;
the second compute device is configured to receive and decrypt the encrypted information to obtain the status information of the first container; and
the second compute device is further configured to synchronize a status of the standby container with a status of the first container based on the status information of the first container.

2. The system according to claim 1, wherein the status of the first container comprises a memory status of the first container, or the status of the first container comprises a memory status of the first container and a status of communication between the first container and a virtual input/output I/O device.

3. The system according to claim 2, wherein the first TEE comprises a first virtual machine, the second TEE comprises a second virtual machine, the first container is located in the first virtual machine, and the standby container is located in the second virtual machine;
a processor of the first compute device is configured to run the first virtual machine to encrypt the status information of the first container to obtain the encrypted information;
the processor of the first compute device is configured to invoke a first communication interface in the first non-trusted execution environment to send the encrypted information to a second communication interface, wherein the first communication interface is a communication interface of the first compute device, and the second communication interface is a communication interface of the second compute device;
a processor of the second compute device is configured to obtain the encrypted information in the second non-trusted execution environment;
the processor of the second compute device is configured to run the second virtual machine to decrypt the encrypted information to obtain the status information of the first container; and
the processor of the second compute device is configured to run the second virtual machine to synchronize the status of the standby container with the status of the first container based on the status information of the first container.

4. The system according to claim 3, wherein the encrypted information is obtained by encrypting the status information of the first container by using an encryption key, the encryption key is obtained by the first virtual machine and the second virtual machine through negotiation, and the encryption key is further used to decrypt the encrypted information.

5. The system according to claim 4, wherein
the processor of the first compute device is configured to run the first virtual machine to obtain authentication information of the first virtual machine;
the processor of the first compute device is configured to invoke the first communication interface in the first non-trusted execution environment to send the authentication information of the first virtual machine to the second communication interface;
the processor of the second compute device is configured to obtain the authentication information of the first virtual machine in the second non-trusted execution environment; and
the processor of the second compute device is configured to run the second virtual machine to obtain the encryption key through negotiation with the first virtual machine when authenticating the first virtual machine based on the authentication information of the first virtual machine.

6. The system according to claim 4 or 5, wherein
the processor of the second compute device is configured to run the second virtual machine to obtain authentication information of the second virtual machine;
the processor of the second compute device is configured to invoke the second communication interface in the second non-trusted execution environment to send the authentication information of the second virtual machine to the first communication interface;
the processor of the first compute device is configured to obtain the authentication information of the second virtual machine in the first non-trusted execution environment; and
the processor of the first compute device is configured to run the first virtual machine to obtain the encryption key through negotiation with the second virtual machine when authenticating the second virtual machine based on the authentication information of the second virtual machine.

7. The system according to claim 6, wherein the authentication information of the first virtual machine comprises a current measurement value of a configuration of the first virtual machine and a historical measurement value of the configuration of the first virtual machine, and the authentication information of the second virtual machine comprises a current measurement value of a configuration of the second virtual machine and a historical measurement value of the configuration of the second virtual machine;
the processor of the second compute device is configured to run the second virtual machine to authenticate the first virtual machine when determining that the current measurement value of the configuration of the first virtual machine is the same as the historical measurement value of the configuration of the first virtual machine; and
the processor of the first compute device is configured to run the first virtual machine to authenticate the second virtual machine when determining that the current measurement value of the configuration of the second virtual machine is the same as the historical measurement value of the configuration of the second virtual machine.

8. The system according to any one of claims 4 to 7, wherein
the processor of the second compute device is configured to run the second virtual machine to generate a message authentication code based on the encryption key and a first message;
the processor of the second compute device is configured to invoke the second communication interface in the second non-trusted execution environment to send the first message and the message authentication code to the first communication interface;
the processor of the first compute device is configured to obtain the first message and the message authentication code in the first non-trusted execution environment; and
the processor of the first compute device is configured to run the first virtual machine to encrypt the status information of the first container by using the encryption key when determining, based on the first message and the message authentication code, that the encryption key is a valid key.

9. The system according to any one of claims 4 to 8, wherein
the processor of the first compute device is configured to run the first virtual machine to generate a first private key and a first public key;
the processor of the first compute device is configured to invoke the first communication interface in the first non-trusted execution environment to send the first public key to the second communication interface;
the processor of the second compute device is configured to obtain the first public key in the second non-trusted execution environment;
the processor of the second compute device is configured to run the second virtual machine to generate a second private key and a second public key, and generate the encryption key based on the second private key and the first public key;
the processor of the second compute device is configured to invoke the second communication interface in the second non-trusted execution environment to send the second public key to the first communication interface;
the processor of the first compute device is configured to obtain the second public key in the first non-trusted execution environment; and
the processor of the first compute device is configured to run the first virtual machine to generate the encryption key based on the first private key and the second public key.

10. The system according to any one of claims 3 to 9, wherein information about
the status of communication between the first container and the virtual I/O device comprises an identity of the first container;
before the processor of the first compute device is configured to run the first virtual machine to encrypt the status information of the first container to obtain the encrypted information, the processor of the first compute device is further configured to:
run the first virtual machine to locate, in a virtual I/O device driver of the first virtual machine based on the identity of the first container, the information about the status of communication between the first container and the virtual I/O device; and
after the processor of the second compute device is configured to run the second virtual machine to decrypt the encrypted information to obtain the status information of the first container, the processor of the second compute device is specifically configured to:
run the second virtual machine to load information about the memory status of the first container to a memory of the standby container, and load the information about the status of communication between the first container and the virtual I/O device to a virtual I/O device driver of the second virtual machine; and
run the second virtual machine to run the standby container based on the information that is about the memory status of the first container and that is in the memory of the standby container and the information that is about the status of communication between the first container and the virtual I/O device and that is located in the virtual I/O device driver of the second virtual machine based on the identity of the first container, to synchronize a memory status of the standby container with the memory status of the first container, and synchronize a communication status of the standby container with a communication status of the first container.

11. A container migration method, applied to a second compute device, wherein software and hardware resources of the second compute device are divided into a second non-trusted execution environment and a second TEE, the second TEE comprises a standby container, and the method comprises:
obtaining, by the second compute device, encrypted information of status information of a first container, wherein the first container is deployed in a first TEE, and the first TEE is a TEE of the first compute device;
decrypting, by the second compute device, the encrypted information to obtain the status information of the first container; and
synchronizing, by the second compute device, a status of the standby container with a status of the first container based on the status information of the first container.

12. The method according to claim 11, wherein the status of the first container comprises a memory status of the first container, or the status of the first container comprises a memory status of the first container and a status of communication between the first container and a virtual I/O device.

13. The method according to claim 11 or 12, wherein the second TEE comprises a
second virtual machine, and the standby container is deployed on the second virtual machine;
obtaining, by the second compute device, the encrypted information of the status information of the first container comprises:
obtaining, by a processor of the second compute device, the encrypted information of the status information of the first container in the second non-trusted execution environment;
decrypting, by the second compute device, the encrypted information to obtain the status information of the first container comprises:
running, by the processor of the second compute device, the second virtual machine to decrypt the encrypted information to obtain the status information of the first container; and
synchronizing, by the second compute device, the status of the standby container with the status of the first container based on the status information of the first container comprises:
running, by the processor of the second compute device, the second virtual machine to synchronize the status of the standby container with the status of the first container based on the status information of the first container.

14. The method according to claim 13, wherein the encrypted information is obtained by encrypting the status information of the first container by using an encryption key, the encryption key is obtained by a first virtual machine and the second virtual machine through negotiation, the encryption key is further used to decrypt the encrypted information, the first virtual machine is deployed in the first TEE, and the first container is deployed on the first virtual machine.

15. The method according to claim 14, wherein the method further comprises:
obtaining, by the processor of the second compute device, authentication information of the first virtual machine in the second non-trusted execution environment; and
running, by the processor of the second compute device, the second virtual machine to obtain the encryption key through negotiation with the first virtual machine when authenticating the first virtual machine based on the authentication information of the first virtual machine.

16. The method according to claim 14 or 15, wherein the method further comprises:
running, by the processor of the second compute device, the second virtual machine to obtain authentication information of the second virtual machine; and
invoking, by the processor of the second compute device, a second communication interface in the second non-trusted execution environment to send the authentication information of the second virtual machine to a first communication interface, wherein the second communication interface is a communication interface of the second compute device, and the first communication interface is a communication interface of the first compute device.

17. The method according to claim 15 or 16, wherein the authentication information of the first virtual machine comprises a current measurement value of a configuration of the first virtual machine and a historical measurement value of the configuration of the first virtual machine; and
the method further comprises:
running, by the processor of the second compute device, the second virtual machine to authenticate the first virtual machine when determining that the current measurement value of the configuration of the first virtual machine is the same as the historical measurement value of the configuration of the first virtual machine.

18. The method according to any one of claims 14 to 17, wherein
running, by the processor of the second compute device, the second virtual machine to generate a message authentication code based on the encryption key and a first message; and
invoking, by the processor of the second compute device, the second communication interface in the second non-trusted execution environment to send the first message and the message authentication code to the first communication interface, wherein the second communication interface is the communication interface of the second compute device, and the first communication interface is the communication interface of the first compute device.

19. The method according to any one of claims 13 to 18, wherein information about the status of communication between the first container and the virtual I/O device comprises an identity of the first container; and
running, by the processor of the second compute device, the second virtual machine to synchronize the status of the standby container with the status of the first container based on the status information of the first container comprises:
running, by the processor of the second compute device, the second virtual machine to load information about the memory status of the first container to a memory of the standby container, and load the information about the status of communication between the first container and the virtual I/O device to a virtual I/O device driver of the second virtual machine; and
running, by the processor of the second compute device, the second virtual machine to run the standby container based on the information that is about the memory status of the first container and that is in the memory of the standby container and the information that is about the status of communication between the first container and the virtual I/O device and that is located in the virtual I/O device driver of the second virtual machine based on the identity of the first container, to synchronize a memory status of the standby container with the memory status of the first container, and synchronize a communication status of the standby container with a communication status of the first container.

20. A container migration method, applied to a first compute device, wherein software and hardware resources of the first compute device are divided into a first non-trusted execution environment and a first TEE, the first TEE comprises a first container, and the method comprises:
encrypting, by a processor of the first compute device, status information of the first container in the first TEE to obtain encrypted information; and
invoking, by the processor of the first compute device, a communication interface of the first compute device in the first non-trusted execution environment to send the encrypted information to a second compute device, wherein the encrypted information is used to migrate the status information of the first container to a standby container, the standby container is deployed in a second TEE, and the second TEE is a TEE of the second compute device.

21. A container migration apparatus, used in a second compute device, wherein software and hardware resources of the second compute device are divided into a second non-trusted execution environment and a second TEE, the second TEE comprises a standby container, and the apparatus comprises:
an obtaining module, configured to obtain encrypted information of status information of a first container, wherein the first container is deployed in a first TEE, and the first TEE is a TEE of the first compute device;
a decryption module, configured to decrypt the encrypted information to obtain the status information of the first container; and
a synchronization module, configured to synchronize a status of the standby container with a status of the first container based on the status information of the first container.

22. A container migration apparatus, used in a first compute device, wherein software and hardware resources of the first compute device are divided into a first non-trusted execution environment and a first TEE, the first TEE comprises a first container, and the apparatus comprises:
an encryption module, configured to encrypt status information of the first container in the first TEE to obtain encrypted information; and
a sending module, configured to invoke a communication interface of the first compute device in the first non-trusted execution environment to send the encrypted information to a second compute device, wherein the encrypted information is used to migrate the status information of the first container to a standby container, the standby container is deployed in a second TEE, and the second TEE is a TEE of the second compute device.

23. A compute device, wherein the compute device comprises a processor and a memory, and the processor of the compute device is configured to execute instructions stored in the memory of the compute device, to enable the compute device to perform the method according to any one of claims 11 to 20.

24. A computer-readable storage medium, comprising computer program instructions, wherein when the computer program instructions are executed by a compute device, the compute device performs the method according to any one of claims 11 to 20.
